# EUROPÄISCHE PATENTSCHRIFT

(11) **EP 1 516 880 B1**
(45) Veröffentlichungstag und Bekanntmachung des Hinweises auf die Patenterteilung: **24.12.2008**
(21) Anmeldenummer: 04021174.0
(22) Anmeldetag: 07.09.2004
(51) Int. Cl.: C07F 9/50, C07F 9/53, C07F 15/00, C07B 53/00, B01J 31/24

(54) **Chirale Phosphane zur Verwendung in asymmetrischen Synthesen**
Chiral phosphines for use in asymmetric synthesis
Phosphines chirales pour utilisation en synthèse asymétrique

(30) Priorität: 16.09.2003 DE 10342672
(43) Veröffentlichungstag der Anmeldung: 23.03.2005
(73) Patentinhaber: Boehringer Ingelheim International GmbH, 55216 Ingelheim (DE)
(72) Erfinder: Artl, Dieter Prof., 32657 Lemgo (DE); Meseguer, Benjamin Dr, 43005 Tarragona (ES)
(74) Vertreter: Kompter, Hans-Michael

(56) Entgegenhaltungen:
- EP-A- 0 749 973
- EP-A- 1 002 801
- WO-A-01/21625
- WO-A-20/04031110
- SCHMID R ET AL: "NEW DEVELOPMENTS IN ENANTIOSELECTIVE HYDROGENATION" PURE & APPLIED CHEMISTRY, PERGAMON PRESS, OXFORD, GB, Bd. 68, Nr. 1, 1996, Seiten 131-138, XP000884387 ISSN: 0033-4545

## Beschreibung

Die vorliegende Erfindung betrifft Biarylbisphosphine und Zwischenprodukte davon. Weiterhin umfasst der Rahmen der Erfindung aus den Biarylbisphosphinen herstellbare Katalysatoren und deren Anwendung in asymmetrischen Synthesen.

Enantiomerenangereicherte Biarylbisphosphine, wie insbesondere solche, die sich von substituierten Binaphthylen und Biphenylen ableiten, führen als Liganden von Übergangsmetallkomplex-Katalysatoren oft zu guter bis sehr guter Enantioselektivität (s. z.B. Helv. Chim. Acta 1988, 71, 897 - 929; Acc. Chem. Res. 1990, 23, 345 - 350; Synlett 1994, 501 - 503; Angew. Chem. 2001, 113, 40 - 75).

Sterische und elektronische Faktoren, die durch Art und Anordnung von Substituenten am Biarylsystem bzw. innerhalb der Phosphingruppen bestimmt werden, beeinflussen sowohl die Enantioselektivität als auch die Aktivität der aus solchen Liganden hergestellten Katalysatoren.

In Einzelfällen werden Rh- und Ru-Katalysatoren dieser Art für enantioselektive C=C-Doppelbindungsisomerisierungen und für enantioselektive Hydrierungen industriell verwendet. Die Zahl derartiger industrieller Prozesse ist bislang beschränkt, weil die Zahl der verfügbaren Liganden, die breit für eine größere Zahl von Substraten mit Erfolg eingesetzt werden können, klein ist. Vielmehr zeigen die umfangreichen Untersuchungen auf diesem Gebiet, dass wegen der prinzipiell vorhandenen Substratspezifität des oft für ein ganz bestimmtes Substrat "maßgeschneiderten" Katalysators schon geringfügige Veränderungen innerhalb der gleichen Substratgruppe die erforderliche Enantiomerenreinheit für ein sehr ähnliches Produkt nicht erreichen lassen.

Aus EP-A 643 065 und EP-A 749 973 sind Vertreter von in 5,5'- und 6,6'-Position substituierten Biphenylbisphosphinen bekannt, die durch Variation der Phosphansubstituenten eine Anpassung der Katalysatoren, die aus diesen Liganden erhältlich sind, an bestimmte Substrate ermöglichen, so dass optimierte Enantioselektivitäten erreicht werden.

Es besteht jedoch weiterhin das Bedürfnis, eine Gruppe von Liganden bzw. daraus herstellbare Katalysatoren bereitzustellen, die sowohl ein allgemein hohes Niveau an Enantioselektivität und Aktivität ermöglichen, als auch eine Anpassung an ein bestimmtes Substrat durch Variation der Substituenten am Ligandensystem in einfacher Weise zulassen.

Gegenstand der vorliegenden Erfindung sind nun Verbindungen der Formel (I), 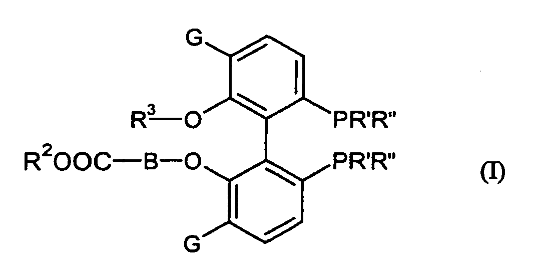 in der
- B: für CHR', wobei R1 für Wasserstoff oder C₁-C₄-Alkyl steht und
- R²: für Methyl, Ethyl, n-Propyl, iso-Propyl, n-Butyl oder tert.-Butyl und
- R³: für C₁-c₆-Alkyl oder B-COOR² und
- G: für Chlor oder Wasserstoff und
- R' und R": jeweils unabhängig voneinander, oder jeweils identisch für C₃-C₈-Alkyl oder C₅-C₁₀-Aryl, das nicht, einfach oder mehrfach mit Resten substituiert ist, die ausgewählt sind aus der Gruppe Chlor, Fluor, Cyano, Phenyl, C₁-C₆-Alkoxy und C₁-C₆-Alkyl, besonders bevorzugt für Cyclopentyl, Cyclohexyl, Cycloheptenyl, Phenyl, o-, m-, p-Tolyl, 3,5-Dimethylphenyl, 3,5-Di-tert.-butylphenyl, 3,5-Dimethyl-4-meth-oxyphenyl, 3,5-Di-tert.-butyl-4-methylphenyl, 4-Trifluormethylphenyl, 4-Fluorphenyl, 2-, 3-Furyl, 2-, 3-Thiophen-yl, 2-N-Methyl-pyrrolyl, N-Methyl-2-indolyl und 2-Thiazolyl, stehen.

Von der Erfindung sind sowohl stereoisomerenangereicherte Verbindungen der Formel (I) als auch optisch nicht aktive Mischungen von Verbindungen der Formel (I) umfasst. Optisch nicht aktive Mischungen von Verbindungen der Formel (I) sind insbesondere racemische Gemische oder bei Vorliegen von Diastereomeren Mischungen von racemischen Mischungen
Bevorzugt sind die stereoisomerenangereicherte Verbindungen der Formel (I) die eine molare Stereoisomerenreinheit von 90 % und mehr, besonders bevorzugt von 95 % oder mehr und ganz besonders bevorzugt 99 % oder mehr aufweisen. Bei Verbindungen der Formel (I) die in zwei enantiomeren Formen auftreten können, ist dementsprechend ein ee von 80 % oder mehr bevorzugt, besonders bevorzugt ein ee von 90 % oder mehr und ganz besonders bevorzugt besonders ein ee von 98 % oder mehr. Bei einer molaren Stereoisomerenreinheit von 99,5 % und mehr bzw. einer Enantiomerenreinheit von 99 % ee oder mehr werden auch die Begriffe stereoisomerenrein bzw. enantiomerenrein verwendet.

Im Rahmen der Erfindung können alle oben stehenden und im Folgenden aufgeführten, allgemeinen oder in Vorzugsbereichen genannten Restedefinitionen, Parameter und Erläuterungen untereinander, also auch zwischen den jeweiligen Bereichen und Vorzugsbereichen in beliebiger Weise kombiniert werden.

**Alkyl** steht beispielsweise und bevorzugt für unverzweigte, verzweigte, cyclische oder acyclische C₁-C₁₂-Alkylreste, die entweder nicht oder zumindest teilweise durch Fluor, Chlor, oder unsubstituiertes oder substituiertes Aryl, oder C₁-C₆-Alkoxy substituiert sein können. Besonders bevorzugt steht Alkyl für verzweigte, cyclische oder acyclische C₁-C₁₂-Alkylreste, die nicht weiter substituiert sind.

**Aryl** steht beispielsweise für carbocyclische aromatische Reste mit 6 bis 18 Gerüstkohlenstoffatomen oder heteroaromatische Reste mit 5 bis 18 Gerüstkohlenstoffatomen, in denen keines, ein, zwei oder drei Gerüstkohlenstoffatome pro Cyclus, im gesamten Molekül mindestens jedoch ein Gerüstkohlenstoffatom, durch Heteroatome, ausgewählt aus der Gruppe Stickstoff, Schwefel oder Sauerstoff, substituiert sein können. Weiterhin können die carbocyclischen aromatischen Reste oder heteroaromatische Reste mit bis zu fünf gleichen oder verschiedenen Substituenten pro Cyclus substituiert sein, ausgewählt aus der Gruppe freies oder geschütztes Hydroxy, Iod, Brom, Chlor, Fluor, Cyano, freies oder geschütztes Formyl, C₁-C₁₂-Alkyl wie zum Beispiel Methyl, Ethyl, n-Propyl, iso-Propyl, n-Butyl, tert.-Butyl, Cyclohexyl, n-Hexyl, n-Octyl oder iso-Octyl, C₆-C₁₂-Aryl, wie zum Beispiel Phenyl, C₁-C₆-Alkoxy, Tri(C₁-C₆-alkyl)siloxyl wie zum Beispiel Trimethylsiloxyl, Triethylsiloxyl und Tri-n-butylsiloxyl.

Beispiele für carbocyclische aromatische Reste mit 6 bis 18 Gerüstkohlenstoffatomen sind zum Beispiel Phenyl, Naphtyl, Phenanthrenyl, Anthracenyl oder Fluorenyl, heteroaromatische Reste mit 5 bis 18 Gerüstkohlenstoffatomen in denen keines, ein, zwei oder drei Gerüstkohlenstoffatome pro Cyclus, im gesamten Molekül mindestens jedoch ein Gerüstkohlenstoffatom, durch Heteroatome, ausgewählt aus der Gruppe Stickstoff, Schwefel oder Sauerstoff, substituiert sein können sind beispielsweise Pyridinyl, Oxazolyl, Thiophen-yl, Benzofuranyl, Benzothiophen-yl, Dibenzofuran-yl, Dibenzothiophen-yl, Furanyl, Indolyl, Pyridazinyl, Pyrazinyl, Pyrimidinyl, Thiazolyl, Triazolyl oder Chinolinyl.

**Geschütztes Formyl** steht im Rahmen der Erfindung für einen Formyl-Rest, der durch Überführung in ein Aminal, Acetal oder ein gemischtes Aminalacetal geschützt ist, wobei die Aminale, Acetale und gemischten Aminalacetale acyclisch oder cyclisch sein können.

**Geschütztes Hydroxy** steht im Rahmen der Erfindung für einen Hydroxy-Rest, der durch Überführung in ein Acetal, Carbonat, Carbamat oder Carboxylat geschützt ist. Beispiele dafür sind die Überführung in ein Tetrahydropyranyladdukt, in ein Benzyloxycarbonyl-, Allyloxycarbonyl- oder ein Tert.-Butyloxycarbonyl-Derivat.

Im Folgenden werden die Vorzugsbereiche für Verbindungen der Formel (I) definiert.
- B: steht bevorzugt für CHR¹, wobei R¹ für Wasserstoff oder Methyl steht.
- R³: steht bevorzugt für Cyclohexyl, Methoxycarbonylmethyl, Ethoxycarbonylmethyl, n-Propoxycarbonylmethyl, iso-Propoxycarbonylmethyl, n-Butoxycarbonylmethyl und tert.-Butylcarbonyl-methyl, 1-Methoxycarbonylethyl, 1-Ethoxycarbonyl-ethyl, 1-n-Propoxycarbonyl-ethyl, 1-iso-Propoxycarbonyl-ethyl, 1-n-Butoxycarbonyl-ethyl und 1-tert.-Butoxycarbonyl-ethyl.
- Für den Fall, dass R³: für Reste des Typs B-COOR² steht, ist dieser Rest vorzugsweise identisch mit dem zweiten Rest des Typs B-COOR².
- R' und R": stehen bevorzugt jeweils unabhängig voneinander, weiter bevorzugt jeweils identisch für Cyclopentyl, Cyclohexyl, Cycloheptenyl, Phenyl, o-, m-, p-Tolyl, 3,5-Dimethylphenyl, 3,5-Di-tert.-butylphenyl, 3,5-Dimethyl-4-methoxyphenyl, 3,5-Di-tert.-butyl-4-methylphenyl, 4-Trifluormethylphenyl, 4-Fluorphenyl, 2-, 3-Furyl, 2-, 3-Thiophen-yl, 2-N-Methyl-pyrrolyl, N-Methyl-2-indolyl und 2-Thiazolyl.

Als besonders bevorzugte Verbindungen der Formel (I) seien genannt:
(R)- und (S)-[5,5'-Dichlor-6,6'-bis(1-methoxycarbonyl-ethoxy)-biphenyl-2,2'-diyl]-bis-[(di-phenyl)phosphin, (R)- und (S)-[5,5'-Dichlor-6,6'-bis(1-ethoxycarbonylethoxy)-biphenyl-2,2'-diyl]-bis-[(di-phenyl)phosphin, (R)- und (S)-[5,5'-Dichlor-6,6'-bis(methoxycarbonyl-methoxy)-biphenyl-2,2'-diyl]-bis-[(di-phenyl)phosphin, (R)-und (S)-[5,5'-Dichlor-6,6'-bis(1-ethoxycarbonyl-methoxy)-biphenyl-2,2'-diyl]-bis-[(di-phenyl)phosphin, (R)- und (S)-[5,5'-Dichlor-6-(methoxycarbonyl-methoxy)-6'-(cyclohexyloxy)-biphenyl-2,2'-diyl]-bis-[(di-phenyl)phosphin, (R)- und (S)-[5,5'-Dichlor-6-(ethoxycarbonyl-methoxy)-6'-(cyclohexyloxy)biphenyl-2,2'-diyl]-bis-[(diphenyl)phosphin,
(R)- und (S)-[5,5'-Dichlor-6,6'-bis(1-methoxycarbonyl-ethoxy)-biphenyl-2,2'-diyl]-bis-[(di-cyclohexyl)phosphin, (R)- und (S)-[5,5'-Dichlor-6,6'-bis(ethoxycarbonylethoxy)-biphenyl-2,2'-diyl]-bis-[(di-cyclohexyl)phosphin, (R)- und (S)-[5,5'-Dichlor-6,6'-bis(methoxycarbonyl-methoxy)-biphenyl-2,2'-diyl]-bis-[(di-cyclohexyl)phosphin, (R)- und (S)-[5,5'-Dichlor-6,6'-bis(ethoxycarbonyl-methoxy)-biphenyl-2,2'-diyl]-bis-[(di-cyclohexyl)phosphin, (R)- und (S)-[5,5'-Dichlor-6-(methoxycarbonylmethoxy)-6'-(cyclohexyloxy)-biphenyl-2,2'-diyl]-bis-[(di-cyclohexyl)phosphin, (R)-und (S)-[5,5'-Dichlor-6-(ethoxycarbonyl-methoxy)-6'-(cyclohexyloxy)biphenyl-2,2'-diyl]-bis-[(di-cyclohexyl)phosphin,
(R)- und (S)-[5,5'-Dichlor-6,6'-bis(1-methoxycarbonyl-ethoxy)-biphenyl-2,2'-diyl]-bis-[(di-3,5-di-tert.-butyl-4-methoxyphenyl)phosphin, (R)- und (S)-[5,5'-Dichlor-6,6'-bis(1-ethoxycarbonyl-ethoxy)-biphenyl-2,2'-diyl]-bis-[(di-3,5-di-tert.-butyl-4-methoxyphenyl)phosphin, (R)- und (S)-[5,5'-Dichlor-6,6'-bis(methoxycarbonyl-methoxy)-biphenyl-2,2'-diyl]-bis-[(di-3,5-di-tert.-butyl-4-methoxyphenyl)phosphin, (R)- und (S)-[5,5'-Dichlor-6,6'-bis(ethoxycarbonyl-methoxy)-biphenyl-2,2'-diyl]-bis-[(di-3,5-di-tert.-butyl-4-methoxyphenyl)phosphin, (R)- und (S)-[5,5'-Dichlor-6-(methoxycarbonyl-methoxy)-6'-(cyclohexyloxy)-biphenyl-2,2'-diyl]-bis-[(di-3,5-ditert.-butyl-4-methoxyphenyl)phosphin, (R)- und (S)-[5,5'-Dichlor-6-(ethoxycarbonylmethoxy)-6'-(cyclohexyloxy)biphenyl-2,2'-diyl]-bis-[(di-3,5-di-tert.-butyl-4-methoxyphenyl)phosphin,
(R)- und (S)-[5,5'-Dichlor-6,6'-bis(1-methoxycarbonyl-ethoxy)-biphenyl-2,2'-diyl]-bis-[(di-3,5-dimethyl-4-methoxyphenyl)phosphin, (R)- und (S)-[5,5'-Dichlor-6,6'-bis(1-ethoxycarbonyl-ethoxy)-biphenyl-2,2'-diyl]-bis-[(di-3,5-dimethyl-4-methoxyphenyl)phosphin, (R)- und (S)-[5,5'-Dichlor-6,6'-bis(methoxycarbonyl-methoxy)-biphenyl-2,2'-diyl]-bis-[(di-3,5-dimethyl-4-methoxyphenyl)phosphin, (R)- und (S)-[5,5'-Dichlor-6,6'-bis(ethoxycarbonyl-methoxy)-biphenyl-2,2'-diyl]-bis-[(di-3,5-dimethyl-4-methoxyphenyl)phosphin, (R)- und (S)-[5,5'-Dichlor-6-(methoxycarbonylmethoxy)-6'-(cyclohexyloxy)-biphenyl-2,2'-diyl]-bis-[(di-3,5-dimethyl-4-methoxyphenyl)phosphin, (R)- und (S)-[5,5'-Dichlor-6-(ethoxycarbonyl-methoxy)-6'-(cyclohexyloxy)biphenyl-2,2'-diyl]-bis-[(di-3,5-dimethyl-4-methoxyphenyl)phosphin,
(R)- und (S)-[5,5'-Dichlor-6,6'-bis(1-methoxycarbonyl-ethoxy)-biphenyl-2,2'-diyl]-bis-[(di-3,5-di-tert.-butylphenyl)phosphin, (R)- und (S)-[5,5'-Dichlor-6,6'-bis(1-ethoxycarbonyl-ethoxy)-biphenyl-2,2'-diyl]-bis-[(di-3,5-di-tert.-butylphenyl)phosphin, (R)- und (S)-[5,5'-Dichlor-6,6'-bis(methoxycarbonyl-methoxy)-biphenyl-2,2'-diyl]-bis-[(di-3,5-di-tert.-butylphenyl)phosphin, (R)- und (S)-[5,5'-Dichlor-6,6'-bis-(ethoxycarbonyl-methoxy)-biphenyl-2,2'-diyl]-bis-[(di-3,5-di-tert.-butylphenyl)phosphin, (R)- und (S)-[5,5'-Dichlor-6-(methoxycarbonyl-methoxy)-6'-(cyclohexyloxy)-biphenyl-2,2'-diyl]-bis-[(di-3,5-di-tert.-butylphenyl)phosphin, (R)- und (S)-[5,5'-Dichlor-6-(ethoxycarbonyl-methoxy)-6'-(cyclohexyloxy)biphenyl-2,2'-diyl]-bis-[(di-3,5-di-tert.-butylphenyl)phosphin,
(R)- und (S)-[5,5'-Dichlor-6,6'-bis(1-methoxycarbonyl-ethoxy)-biphenyl-2,2'-diyl]-bis-[(di-4-fluorphenyl)phosphin, (R)- und (S)-[5,5'-Dichlor-6,6'-bis(1-ethoxycarbonyl-ethoxy)-biphenyl-2,2'-diyl]-bis-[(di-4-fluorphenyl)phosphin, (R)- und (S)-[5,5'-Dichlor-6,6'-bis(methoxycarbonyl-methoxy)-biphenyl-2,2'-diyl]-bis-[(di-4-fluorphenyl)phosphin, (R)- und (S)-[5,5'-Dichlor-6,6'-bis(ethoxycarbonyl-methoxy)-biphenyl-2,2'-diyl]-bis-[(di-4-fluorphenyl)phosphin, (R)- und (S)-[5,5'-Dichlor-6-(methoxycarbonyl-methoxy)-6'-(cyclohexyloxy)-biphenyl-2,2'-diyl]-bis-[(di-4-fluorphenyl)phosphin sowie (R)- und (S)-[5,5'-Dichlor-6-(ethoxycarbonyl-methoxy)-6'-(cyclohexyloxy)biphenyl-2,2'-diyl]-bis-[(di-4-fluorphenyl)phosphin,
sowie die analogen in 5,5'-Position unsubstituierten Verbindungen und im Falle eines stereogenen Zentrums in den in 6 und/oder 6'-Position gebundenen Resten auch die entsprechenden in den genannten Resten (R)- und (S)-konfigurierten Verbindungen.

Die erfindungsgemäßen Verbindungen der Formel (I) können beispielsweise so hergestellt werden, dass
- in einem Schritt a)
   Verbindungen der Formel (II) 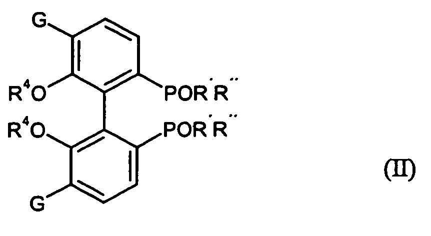 durch Etherspaltung in Verbindungen der Formel (III) überführt werden, 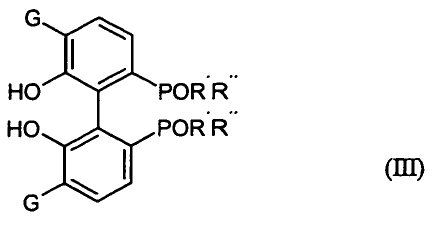
- in einem Schritt b1)
   die Verbindungen der Formel (III) durch Umsetzung mit Verbindungen der Formel (IV)

   R³-Akt (IV)

   in Gegenwart von Base zu Verbindungen der Formel (V) umgesetzt werden, 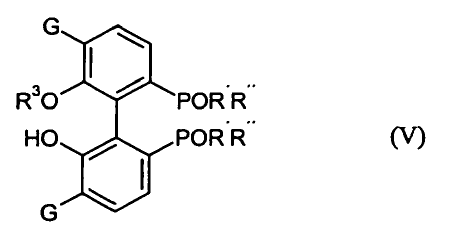
- in einem Schritt b2)
   die Verbindungen der Formel (V) durch Umsetzung mit Verbindungen der Formel (VI)

   R²OOC-B-Akt (VI)

   in Gegenwart von Base zu Verbindungen der Formel (VII) umgesetzt werden, 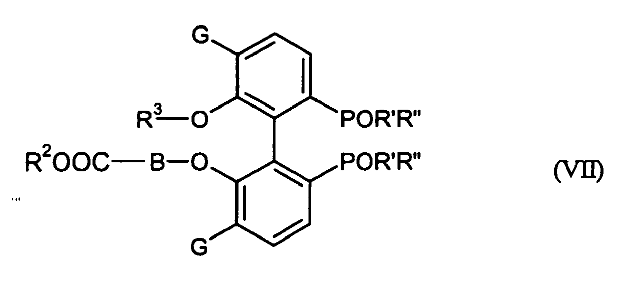
- und in einem Schritt c)
   die Verbindungen der Formel (VII) zu Verbindungen der Formel (I) reduziert werden,
wobei in den genannten Formeln B, R², R³, G, R' und R" die gleichen Bedeutungen und Vorzugsbereiche besitzen, die oben unter der Formel (I) und (II) bereits definiert worden sind und
Akt für Halogen oder ein Sulfonat, vorzugsweise für Chlor oder Brom besonders bevorzugt für Brom steht und
R⁴ in Formel (II) für C₁-C₆-Alkyl steht.

Sind die eingesetzten Verbindungen der Formeln (IV) und (VI) identisch werden die Schritte b1) und b2) natürlich vorzugsweise in einer Reaktion durchgeführt.

Sofern nicht bereits enantiomerenangereicherte Verbindungen der Formel (II) zur Herstellung von Verbindungen der Formel (I) eingesetzt werden, lassen sich vorzugsweise die Verbindungen der Formel (VII) in an sich bekannter Weise beispielsweise durch Umsetzung mit einem chiralen Hilfsreagenz oder durch kontinuierliche oder diskontinuierliche Chromatographie bei Enantiomeren an einem chiralen Säulenmaterial in die Stereoisomeren auftrennen.

Die Etherspaltung gemäß Schritt a) kann beispielsweise in an sich bekannter Weise durch Umsetzung mit BBr₃ und anschließender Behandlung mit Wasser erfolgen.

Die Umsetzung der Verbindungen der Formel (III) mit Verbindungen der Formel (IV) gemäß Schritt b1) sowie die Umsetzung der Verbindungen der Formel (V) mit Verbindungen der Formel (VI) gemäß Schritt b2) werden bevorzugt in organischem Lösungsmittel in Gegenwart von Basen durchgeführt.

Als Lösungsmittel eignen sich insbesondere Alkohole, wie beispielsweise Methanol, Ethanol, Propanol, Ethylenglykol oder Ethylenglykohnonomethylether und amidische Lösungsmittel wie z.B. N,N-Dimethylformamid, N,N-Dimethylacetamid oder N-Methylpyrrolidon oder Mischungen der genannten Lösungsmittel.

Als Basen können beispielsweise Alkali- und Erdalkali-Verbindungen wie Oxide, Hydroxide, Carbonate oder Alkoholate verwendet werden, beispielsweise seien genannt: Calciumoxid, Natriumhydroxid, Kaliumcarbonat oder Natriummethanolat. Es ist auch möglich, tertiäre Amine wie z.B. Triethylamin oder Tributylamin als Basen einzusetzen.

Das molare Verhältnis zwischen eingesetzter Verbindung der Formel (III) bzw. (V) und Verbindung der Formel (IV) bzw. (VI) liegt vorzugsweise zwischen 1:1 und 1:1,5 respektive 1:2 und 1:10 bei identischen Verbindungen der Formeln (IV) und (VI); i.A. genügt auch für eine vollständige Umsetzung ein geringfügiger Überschuss an Verbindungen der Formeln (IV) bzw. (VI). Die Base wird vorzugsweise in mindestens äquivalenter Menge zur Verbindung der Formeln (III) bzw. (V) eingesetzt. Bei der Verwendung von im Lösungsmittel unlöslichen Basen, beispielsweise von Kaliumcarbonat in DMF, ist es zweckmäßig, die vier- bis zehnfache molare Menge zu verwenden und gleichzeitig für eine intensive Durchmischung der Suspension zu sorgen.

Die Reaktion gemäß Schritt b) kann auch in einem zweiphasigen System ausgeführt werden, wobei als nicht-wässrige Phase Lösungsmittel eingesetzt werden, in denen die entstehenden Produkt der Formeln (V) bzw. (VII) zumindest überwiegend löslich ist. Dafür eignet sich beispielsweise Dichlormethan. Es ist zweckmäßig, bei dieser Variante der Umsetzung Phasentransferkatalysatoren wie z.B. quatäre Ammoniumoder Phosphinsalze und Tetrabutylammoniumsalze zu verwenden. Bevorzugt sind Tetrabutylammoniumsalze.

Die Reaktionstemperatur bei der Umsetzung von Verbindungen der Formel (III) zur Herstellung der Verbindungen der Formel (IV) kann beispielsweise im Bereich von etwa 20°C bis 100°C, vorzugsweise im Bereich von 20°C bis 80°C, liegen. Analoges gilt bei der Umsetzung von Verbindungen der Formel (V) zur Herstellung der Verbindungen der Formel (VII).

Die Reduktion der Verbindungen der Formel (VII) zu den Verbindungen der Formel (I) gemäß Schritt c) wird vorzugsweise nach an sich bekannten Methoden durchgeführt, beispielsweise durch Umsetzung mit Trichlorsilan in inerten Lösungsmitteln wie Toluol oder Xylol und in Gegenwart von tertiären Aminen wie Tri-nbutylamin bei Rückflusstemperatur, (siehe z.B. EP-A 398 132, EP-A 749 973 sowie EP-A 926 152).

Prinzipiell ist auch zunächst die Umsetzung von Verbindungen der Formel (III) mit Verbindungen der Formel (VI) und die anschließende Umsetzung mit Verbindungen der Formel (IV) möglich.

Das beschriebene Verfahren zur Herstellung von Verbindungen der Formel (VII) und (I) ist ebenso von der Erfindung umfasst, wie die zur Herstellung von Verbindungen der Formel (I) zwangsläufig benötigten Verbindungen der Formeln (V) und (VII) und zwar sowohl in Form ihrer reinen Stereoisomeren als auch in beliebigen Mischungen davon wie insbesondere der racemischen Mischung.

Als Verbindungen der Formel (VII) seien genannt:
(R)- und (S)-[5,5'-Dichlor-6,6'-bis(1-methoxycarbonyl-ethoxy)-biphenyl-2,2'-diyl]-bis-[(di-phenyl)phosphinoxid, (R)- und (S)-[5,5'-Dichlor-6,6'-bis(1-ethoxycarbonylethoxy)-biphenyl-2,2'-diyl]-bis-[(di-phenyl)phosphinoxid, (R)- und (S)-[5,5'-Dichlor-6,6'-bis(methoxycarbonyl-methoxy)-biphenyl-2,2'-diyl]-bis-[(di-phenyl)phosphinoxid, (R)- und (S)-[5,5'-Dichlor-6,6'-bis(ethoxycarbonyl-methoxy)-biphenyl-2,2'-diyl]-bis-[(di-phenyl)phosphinoxid, (R)- und (S)-[5,5'-Dichlor-6-(methoxycarbonylmethoxy)-6'-(cyclohexyloxy)-biphenyl-2,2'-diyl]-bis-[(di-phenyl)phosphinoxid, (R)-und (S)-[5,5'-Dichlor-6-(ethoxycarbonyl-methoxy)-6'-(cyclohexyloxy)biphenyl-2,2'-diyl]-bis-[(di-phenyl)phosphinoxid,
(R)- und (S)-[5,5'-Dichlor-6,6'-bis(1-methoxycarbonyl-ethoxy)-biphenyl-2,2'-diyl]-bis-[(di-cyclohexyl)phosphinoxid, (R)- und (S)-[5,5'-Dichlor-6,6'-bis(1-ethoxycarbonyl-ethoxy)-biphenyl-2,2'-diyl]-bis-[(di-cyclohexyl)phosphinoxid, (R)- und (S)-[5,5'-Dichlor-6,6'-bis(methoxycarbonyl-methoxy)-biphenyl-2,2'-diyl]-bis-[(di-cyclohexyl)phosphinoxid, (R)- und (S)-[5,5'-Dichlor-6,6'-bis(ethoxycarbonyl-methoxy)-biphenyl-2,2'-diyl]-bis-[(di-cyclohexyl)phosphinoxid, (R)- und (S)-[5,5'-Dichlor-6-(methoxycarbonyl-methoxy)-6'-(cyclohexyloxy)-biphenyl-2,2'-diyl]-bis-[(di-cyclohexyl)phosphinoxid, (R)- und (S)-[5,5'-Dichlor-6-(ethoxycarbonyl-methoxy)-6'-(cyclohexyloxy)biphenyl-2,2'-diyl]-bis-[(di-cyclohexyl)phosphinoxid,
(R)- und (S)-[5,5'-Dichlor-6,6'-bis(1-methoxycarbonyl-ethoxy)-biphenyl-2,2'-diyl]-bis-[(di-3,5-di-tert.-butyl-4-methoxyphenyl)phosphinoxid, (R)- und (S)-[5,5'-Dichlor-6,6'-bis(1-ethoxycarbonyl-ethoxy)-biphenyl-2,2'-diyl]-bis-[(di-3,5-di-tert.-butyl-4-methoxyphenyl)phosphinoxid, (R)- und (S)-[5,5'-Dichlor-6,6'-bis(methoxycarbonylmethoxy)-biphenyl-2,2'-diyl]-bis-[(di-3,5-di-tert.-butyl-4-methoxyphenyl)-phosphinoxid, (R)- und (S)-[5,5'-Dichlor-6,6'-bis(ethoxycarbonyl-methoxy)-biphenyl-2,2'-diyl]-bis-[(di-3,5-di-tert.-butyl-4-methoxyphenyl)phosphinoxid, (R)-und (S)-[5,5'-Dichlor-6-(methoxycarbonyl-methoxy)-6'-(cyclohexyloxy)-biphenyl-2,2'-diyl]-bis-[(di-3,5-di-tert.-butyl-4-methoxyphenyl)phosphinoxid, (R)- und (S)-[5,5'-Dichlor-6-(ethoxycarbonyl-methoxy)-6'-(cyclohexyloxy)biphenyl-2,2'-diyl]-bis-[(di-3,5-di-tert.-butyl-4-methoxyphenyl)phosphinoxid,
(R)- und (S)-[5,5'-Dichlor-6,6'-bis(1-methoxycarbonyl-ethoxy)-biphenyl-2,2'-diyl]-bis-[(di-3,5-dimethyl-4-methoxyphenyl)phosphinoxid, (R)- und (S)-[5,5'-Dichlor-6,6'-bis(1-ethoxycarbonyl-ethoxy)-biphenyl-2,2'-diyl]-bis-[(di-3,5-dimethyl-4-methoxyphenyl)phosphinoxid, (R)- und (S)-[5,5'-Dichlor-6,6'-bis(methoxycarbonylmethoxy)-biphenyl-2,2'-diyl]-bis-[(di-3,5-dimethyl-4-methoxyphenyl)phosphinoxid, (R)- und (S)-[5,5'-Dichlor-6,6'-bis(ethoxycarbonyl-methoxy)-biphenyl-2,2'-diyl]-bis-[(di-3,5-dimethyl-4-methoxyphenyl)phosphinoxid, (R)- und (S)-[5,5'-Dichlor-6-(methoxycarbonyl-methoxy)-6'-(cyclohexyloxy)-biphenyl-2,2'-diyl]-bis-[(di-3,5-dimethyl-4-methoxyphenyl)phosphinoxid, (R)- und (S)-[5,5'-Dichlor-6-(ethoxycarbonyl-methoxy)-6'-(cyclohexyloxy)biphenyl-2,2'-diyl]-bis-[(di-3,5-dimethyl-4-methoxyphenyl)phosphinoxid,
(R)- und (S)-[5,5'-Dichlor-6,6'-bis(1-methoxycarbonyl-ethoxy)-biphenyl-2,2'-diyl]-bis-[(di-3,5-di-tert.-butylphenyl)phosphinoxid, (R)- und (S)-[5,5'-Dichlor-6,6'-bis(1-ethoxycarbonyl-ethoxy)-biphenyl-2,2'-diyl]-bis-[(di-3,5-di-tert.-butylphenyl)phosphinoxid, (R)- und (S)-[5,5'-Dichlor-6,6'-bis(methoxycarbonyl-methoxy)-biphenyl-2,2'-diyl]-bis-[(di-3,5-di-tert.-butylphenyl)phosphinoxid, (R)- und (S)-[5,5'-Dichlor-6,6'-bis(ethoxycarbonyl-methoxy)-biphenyl-2,2'-diyl]-bis-[(di-3,5-di-tert.-butylphenyl)phosphinoxid, (R)- und (S)-[5,5'-Dichlor-6-(methoxycarbonyl-methoxy)-6'-(cyclohexyloxy)-biphenyl-2,2'-diyl]-bis-[(di-3,5-di-tert.-butylphenyl)phosphinoxid, (R)- und (S)-[5,5'-Dichlor-6-(ethoxycarbonyl-methoxy)-6'-(cyclohexyloxy)biphenyl-2,2'-diyl]-bis-[(di-3,5-di-tert.-butylphenyl)phosphinoxid,
(R)- und (S)-[5,5'-Dichlor-6,6'-bis(1-methoxycarbonyl-ethoxy)-biphenyl-2,2'-diyl]-bis-[(di-4-fluorphenyl)phosphinoxid, (R)- und (S)-[5,5'-Dichlor-6,6'-bis(1-ethoxycarbonyl-ethoxy)-biphenyl-2,2'-diyl]-bis-[(di-4-fluorphenyl)phosphinoxid, (R)- und (S)-[5,5'-Dichlor-6,6'-bis(methoxycarbonyl-methoxy)-biphenyl-2,2'-diyl]-bis-[(di-4-fluorphenyl)phosphinoxid, (R)- und (S)-[5,5'-Dichlor-6,6'-bis(ethoxycarbonylmethoxy)-biphenyl-2,2'-diyl]-bis-[(di-4-fluorphenyl)phosphinoxid, (R)- und (S)-[5,5'-Dichlor-6-(methoxycarbonyl-methoxy)-6'-(cyclohexyloxy)-biphenyl-2,2'-diyl]-bis-[(di-4-fluorphenyl)phosphinoxid sowie (R)- und (S)-[5,5'-Dichlor-6-(ethoxycarbonylmethoxy)-6'-(cyclohexyloxy)biphenyl-2,2'-diyl]-bis-[(di-4-fluorphenyl)phosphinoxid,
sowie die analogen in 5,5'-Position unsubstituierten Verbindungen und im Falle eines sterogenen Zentrums in den in 6 und/oder 6'-Position gebundenen Resten auch die entsprechenden in den genannten Resten (R)- und (S)-konfigurierten Verbindungen.

Als Verbindungen der Formel (V) seien genannt:
(R)- und (S)-[5,5'-Dichlor-6-(1-methoxycarbonyl-ethoxy)-6'-hydroxy-biphenyl-2,2'-diyl]bis-[(di-phenyl)phosphinoxid, (R)- und (S)-[5,5'-Dichlor-6-(methoxycarbonylmethoxy)-6'-hydroxy-biphenyl-2,2'-diyl]-bis-[(di-phenyl)phosphinoxid, (R)- und (S)-[5,5'-Dichlor-6-(1-ethoxycarbonyl-ethoxy)-6'-hydroxy-biphenyl-2,2'-diyl]bis-[(diphenyl)phosphinoxid, (R)- und (S)-[5,5'-Dichlor-6-(ethoxycarbonyl-methoxy)-6'-hydroxy-biphenyl-2,2'-diyl]-bis-[(di-phenyl)phosphinoxid, (R)- und (S)-[5,5'-Dichlor-6-cyclohexyloxy-6'-hydroxy-biphenyl-2,2'-diyl]bis-[(di-phenyl)phosphinoxid,
(R)- und (S)-[5,5'-Dichlor-6-(1-methoxycarbonyl-ethoxy)-6'-hydroxy-biphenyl-2,2'-diyl]bis-[(di-cyclohexyl)phosphinoxid, (R)- und (S)-[5,5'-Dichlor-6-(methoxycarbonyl-methoxy)-6'-hydroxy-biphenyl-2,2'-diyl]-bis-[(di-cyclohexyl)phosphinoxid, (R)- und (S)-[5,5'-Dichlor-6-(1-ethoxycarbonyl-ethoxy)-6'-hydroxy-biphenyl-2,2'-diyl]bis-[(di-cyclohexyl)phosphinoxid, (R)- und (S)-[5,5'-Dichlor-6-(ethoxycarbonylmethoxy)-6'-hydroxy-biphenyl-2,2'-diyl]-bis-[(di-cyclohexyl)phosphinoxid, (R)- und (S)-[5,5'-Dichlor-6-cyclohexyloxy-6'-hydroxy-biphenyl-2,2'-diyl]bis-[(dicyclohexyl)phosphinoxid,
(R)- und (S)-[5,5'-Dichlor-6-(1-methoxycarbonyl-ethoxy)-6'-hydroxy-biphenyl-2,2'-diyl]bis-[(di-3,5-di-tert.-butyl-4-methoxyphenyl)phosphinoxid, (R)- und (S)-[5,5'-Dichlor-6-(methoxycarbonyl-methoxy)-6'-hydroxy-biphenyl-2,2'-diyl]-bis-[(di-3,5-di-tert.-butyl-4-methoxyphenyl)phosphinoxid, (R)- und (S)-[5,5'-Dichlor-6-(1-ethoxycarbonyl-ethoxy)-6'-hydroxy-biphenyl-2,2'-diyl]bis-[(di-3,5-di-tert.-butyl-4-methoxyphenyl)phosphinoxid, (R)- und (S)-[5,5'-Dichlor-6-(ethoxycarbonylmethoxy)-6'-hydroxy-biphenyl-2,2'-diyl]-bis-[(di-3,5-di-tert.-butyl-4-methoxyphenyl)phosphinoxid, (R)- und (S)-[5,5'-Dichlor-6-cyclohexyloxy-6'-hydroxybiphenyl-2,2'-diyl]bis-[(di-3,5-di-tert.-butyl-4-methoxyphenyl)phosphinoxid,
(R)- und (S)-[5,5'-Dichlor-6-(1-methoxycarbonyl-ethoxy)-6'-hydroxy-biphenyl-2,2'-diyl]bis-[(di-3,5-methyl-4-methoxyphenyl)phosphinoxid, (R)- und (S)-[5,5'-Dichlor-6-(methoxycarbonyl-methoxy)-6'-hydroxy-biphenyl-2,2'-diyl]-bis-[(di-3,5-methyl-4-methoxyphenyl)phosphinoxid, (R)- und (S)-[5,5'-Dichlor-6-(1-ethoxycarbonylethoxy)-6'-hydroxy-biphenyl-2,2'-diyl]bis-[(di-3,5-methyl-4-methoxyphenyl)phosphinoxid, (R)- und (S)-[5,5'-Dichlor-6-(ethoxycarbonyl-methoxy)-6'-hydroxy-biphenyl-2,2'-diyl]-bis-[(di-3,5-methyl-4-methoxyphenyl)phosphinoxid, (R)- und (S)-[5,5'-Dichlor-6-cyclohexyloxy-6'-hydroxy-biphenyl-2,2'-diyl]bis-[(di-3,5-methyl-4-methoxyphenyl)phosphinoxid,
(R)- und (S)-[5,5'-Dichlor-6-(1-methoxycarbonyl-ethoxy)-6'-hydroxy-biphenyl-2,2'-diyl]bis-[(di-3,5-di-tert.-butylphenyl)phosphinoxid, (R)- und (S)-[5,5'-Dichlor-6-(methoxycarbonyl-methoxy)-6'-hydroxy-biphenyl-2,2'-diyl]-bis-[(di-3,5-di-tert.butylphenyl)phosphinoxid, (R)- und (S)-[5,5'-Dichlor-6-(1-ethoxycarbonyl-ethoxy)-6'-hydroxy-biphenyl-2,2'-diyl]bis-[(di-3,5-di-tert.-butylphenyl)phosphinoxid, (R)-und (S)-[5,5'-Dichlor-6-(ethoxycarbonyl-methoxy)-6'-hydroxy-biphenyl-2,2'-diyl]-bis-[(di-3,5-di-tert.-butylphenyl)phosphinoxid, (R)- und (S)-[5,5'-Dichlor-6-cyclohexyloxy-6'-hydroxy-biphenyl-2,2'-diyl]bis-[(di-3,5-di-tert.-butylphenyl)phosphinoxid,
(R)- und (S)-[5,5'-Dichlor-6-(1-methoxycarbonyl-ethoxy)-6'-hydroxy-biphenyl-2,2'-diyl]bis-[(di-4-fluorphenyl)phosphinoxid, (R)- und (S)-[5,5'-Dichlor-6-(methoxycarbonyl-methoxy)-6'-hydroxy-biphenyl-2,2'-diyl]-bis-[(di-4-fluorphenyl)phosphinoxid, (R)- und (S)-[5,5'-Dichlor-6-(1-ethoxycarbonyl-ethoxy)-6'-hydroxy-biphenyl-2,2'-diyl]bis-[(di-4-fluorphenyl)phosphinoxid, (R)- und (S)-[5,5'-Dichlor-6-(ethoxycarbonyl-methoxy)-6'-hydroxy-biphenyl-2,2'-diyl]-bis-[(di-4-fluorphenyl)phosphinoxid, (R)- und (S)-[5,5'-Dichlor-6-cyclohexyloxy-6'-hydroxy-biphenyl-2,2'-diyl]bis-[(di-4-fluorphenyl)phosphinoxid,
sowie die analogen in 5,5'-Position unsubstituierten Verbindungen und im Falle eines sterogenen Zentrums in den in 6 und/oder 6'-Position gebundenen Resten auch die entsprechenden in den genannten Resten (R)- und (S)-konfigurierten Verbindungen.

Die Verbindungen der Formel (I), vorzugsweise in stereoisomerenangereicherter Form, eignen sich insbesondere als Liganden für die Herstellung von Übergangsmetallkomplexen, die als Katalysatoren für Verfahren zur Herstellung von enantiomerenangereicherten Verbindungen verwendet werden können.

Die Vorzugsbereiche für Verbindungen der Formel (I) gelten im Folgenden in gleicher Weise wie oben beschrieben.

Daher sind von Erfindung sowohl Übergangsmetallkomplexe enthaltend Verbindungen der Formel (I) umfasst, als auch Katalysatoren, die die erfindungsgemäßen Übergangsmetallkomplexe enthalten.

Bevorzugte Übergangsmetallkomplexe sind dabei solche, die durch Umsetzung von Verbindungen der Formel (I) in Gegenwart von Übergangsmetallverbindungen erhältlich sind.

Bevorzugte Übergangsmetallverbindungen sind Verbindungen von Rhodium, Iridium, Ruthenium, Palladium und Nickel, wobei solche von Rhodium, Iridium und Ruthenium weiter bevorzugt sind.

Bevorzugte Übergangsmetallverbindungen sind beispielsweise solche der Formel (VIIIa)

M(Y¹)₃ (VIIIa)

in der
- M: für Ruthenium, Rhodium, Iridium und
- Y¹: für Chlorid, Bromid, Acetat, Nitrat, Methansulfonat, Trifluormethansulfonat oder Acetylacetonat und
oder Übergangsmetallverbindungen der Formel (VIIIb)

M(Y²)ₚB¹ ₂ (VIIIb)

in der
- M: für Ruthenium, Rhodium, Iridium und
- Y²: für Chlorid, Bromid, Acetat, Methansulfonat, Trifluormethansulfonat, Tetrafluoroborat, Hexafluorophosphat Perchlorat, Hexafluoroantimonat, Tetra(bis-3,5-trifluormethylphenyl)borat oder Tetraphenylborat steht und
- p: für Rhodium und Iridium für 1 und
für Ruthenium für 2 steht,
- B¹: jeweils für ein C₂-C₁₂-Alken wie beispielsweise Ethylen oder Cycloocten, oder ein Nitril wie beispielsweise Acetonitril, Benzonitril oder Benzylnitril steht, oder
- B¹₂: zusammen für ein (C₄-C₁₂)-Dien wie beispielsweise Norbornadien oder 1,5-Cyclooctadien steht
oder Übergangsmetallverbindungen der Formel (VIIIc)

[MB²Y¹ ₂]₂ (VIIIc)

in der
- M: für Ruthenium und
- B²: für Arylreste wie zum Beispiel Cymol, Mesityl, Phenyl oder Cyclooctadien, Norbornadien oder Methylallyl steht
oder Übergangsmetallverbindungen der Formel (VIIId)

Me₃[M(Y³)₄] (VIIId),

wobei
- M: für Iridium oder Rhodium und
- Y³: für Chlorid oder Bromid steht und
- Me: für Lithium, Natrium, Kalium, Ammonium oder organisches Ammonium steht und
oder Übergangsmetallverbindungen der Formel (VIIIe)

[M(B³)₂]An (VIIIe),

wobei
- M: für Iridium oder Rhodium und
- B³: für ein (C₄-C₁₂)-Dien wie beispielsweise Norbornadien oder 1,5-Cyclooctadien steht
- An: für ein nicht oder schwach koordinierendes Anion wie zum Beispiel Methansulfonat, Trifluormethansulfonat, Tetrafluoroborat, Hexafluoro-phosphat Perchlorat, Hexafluoroantimonat, Tetra(bis-3,5-trifluormethylphenyl)borat oder Tetraphenylborat steht.

Darüber hinaus sind als Übergangsmetallverbindungen Cyclopentadienyl₂Ru, Rh(acac)(CO)₂, Ir(pyridin)₂(1,5-Cyclooctadien) oder mehrkernige verbrückte Komplexe wie beispielsweise [Rh(1,5-cyclooctadien)Cl]₂ und [Rh(1,5-cyclooctadien)Br]₂, [Rh(Ethen)₂Cl]₂, [Rh(Cycloocten)₂Cl]₂, [Ir(1,5-cyclooctadien)Cl]₂ und [Ir(1,5-cyclooctadien)Br]₂, [Ir(Ethen)₂Cl]₂, und [Ir(Cycloocten)₂Cl]₂ bevorzugt.

Ganz besonders bevorzugt werden als Übergangsmetallmetallverbindungen eingesetzt:
[Rh(cod)Cl]₂, [Rh(cod)₂Br], [Rh(cod)₂]ClO₄, [Rh(cod)₂]BF₄, [Rh(cod)₂]PF₆, [Rh(cod)₂]OTf, [Rh(cod)₂]BAr₄ (Ar = 3,5-bistrifluormethylphenyl) [Rh(cod)₂]SbF₆ RuCl₂(cod), [(Cymol)RuCl₂]₂, [(Benzol)RuCl₂]₂, [(Mesityl)RuCl₂]₂, [(Cymol)RuBr₂]₂, [(Cymol)RuI₂]₂, [(Cymol)Ru(BF₄)₂]₂, [(Cymol)Ru(PF₆)₂]₂, [(Cymol)Ru(BAr₄)₂]₂, (Ar = 3,5-bistrifluormethylphenyl), [(Cymol)Ru(SbF₆)₂]₂, [Ir(cod)₂Cl]₂, [Ir(cod)₂]PF₆, [Ir(cod)₂]ClO₄, [Ir(cod)₂]SbF₆ [Ir(cod)₂]BF₄, [Ir(cod)₂]OTf, [Ir(cod)₂]BAr₄ (Ar = 3,5-bistrifluormethylphenyl) RuCl₃, RhCl₃, [Rh(nbd)Cl]₂, [Rh(nbd)₂Br], [Rh(nbd)₂]ClO₄, [Rh(nbd)₂]BF₄, [Rh(nbd)₂]PF₆, [Rh(nbd)₂]OTf, [Rh(nbd)₂]BAr₄ (Ar = 3,5-bistrifluormethylphenyl) [Rh(nbd)₂]SbF₆ RuCl₂(nbd), [Ir(nbd)₂]PF₆, [Ir(nbd)₂]ClO₄, [Ir(nbd)₂]SbF₆ [Ir(nbd)₂]BF₄, [Ir(nbd)₂]OTf, [Ir(nbd)₂]BAr₄ (Ar = 3,5-bistrifluormethylphenyl), Ir(pyridin)₂(nbd), RuCl₃, [Ru(DMSO)₄Cl₂], [Ru(CH₃CN)₄Cl₂], [Ru(PhCN)₄Cl₂], [Ru(cod)Cl₂]ₙ, [Ru(cod)(Methallyl)₂] und [Ru(acetylacetonat)₃].

Besonders bevorzugte Übergangsmetallkomplexe sind solche der Formeln (VIIIa,b,c)

[M(I)Hal]₂ (IXa)

[M(cod)(I)]An (IXb)

[M(nbd)(I)]An (IXc)

in denen
- M: für Rhodium oder Iridium steht und
- Hal: für Chlorid, Bromid oder Iodid und
- (I): für eine Verbindung der Formel (I) steht und
- An: für ein nicht oder schwach koordinierendes Anion wie zum Beispiel Methansulfonat, Trifluormethansulfonat, Tetrafluoroborat, Hexafluoro-phosphat Perchlorat, Hexafluoroantimonat, Tetra(bis-3,5-trifluormethylphenyl)borat oder Tetraphenylborat steht und

Verbindungen der Formeln (Xa,b,c,d,e,f)

[Ru(AcO)₂(I)] (Xa)

[Ru₂Cl₄(I)₂NEt₃] (Xb)

[RuHal(I)(AR)]₂ (Xc)

[Ru(I)](An)₂ (Xd)

[{RuHal(I)}₂(µ-Hal)₃]⁻ [(R"')₂NH₂]⁺ (Xe)

[RuHal₂(I)(Diamin)] (Xf)

in denen
- Hal: für Chlorid, Bromid oder Iodid und
- (I): für eine Verbindung der Formel (I) steht und
- An: für ein nicht oder schwach koordinierendes Anion wie zum Beispiel Methansulfonat, Trifluormethansulfonat, Tetrafluoroborat, Hexafluoro-phosphat Perchlorat, Hexafluoroantimonat, Tetra(bis-3,5-trifluormethylphenyl)borat oder Tetraphenylborat steht und
- R''': jeweils unabhängig für C₁-C₆-Alkyl steht und
- Diamin: für chirale 1,2-Diamine steht, die vorzugsweise ausgewählt sind aus der Gruppe (S,S) und (R,R)-1,2-Diphenyl-ethylen-diamin und (R)-oder (S)-1,1-Bis-(4-methoxyphenyl)-3-methyl-1,2-butandiamin und
- AR: für einen Arenliganden steht, der vorzugsweise ausgewählt ist aus der Gruppe Benzol, p-Cymol und Mesitylen.

Die Herstellung solcher Komplextypen ist prinzipiell bekannt und beispielsweise analog zu Chemistry Letters, 1851, 1989; J. Organomet. Chem., 1992, 428, 213 (IXa,b,c); J. Chem. Soc., Chem. Commun., 922, 1985 (Xa,b,c,d), EP-A 945 457 (Xe) und Pure Appl. Chem.,Vol. 71,8,1493-1501, 1999 (Xf) möglich.

Die erfindungsgemäßen Übergangsmetallkomplexe und Katalysatoren eignen sich insbesondere für den Einsatz in einem Verfahren zur übergangsmetallkatalysierten Herstellung von enantiomerenangereicherten Verbindungen und für C=C-Doppelbindungsisomerisierungen, das von der Erfindung ebenfalls umfasst ist.

Dabei können sowohl isolierte Übergangsmetallkomplexe wie zum Beispiel solche der Formeln (IXa-c) und (Xa-e) als auch in situ hergestellte Übergangsmetallkomplexe eingesetzt werden, wobei letztere bevorzugt sind.

Bevorzugt werden die Übergangsmetallkomplexe und Katalysatoren für asymmetrische Hydrogenierungen eingesetzt. Bevorzugte asymmetrische Hydrogenierungen sind beispielsweise Hydrogenierungen von prochiralen C=C-Bindungen wie zum Beispiel prochirale Enamine, Olefine, Enolether, C=O-Bindungen wie zum Beispiel prochirale Ketone und C=N-Bindungen wie zum Beispiel prochirale Imine. Besonders bevorzugte asymmetrische Hydrogenierungen sind Hydrogenierungen von prochiralen Ketonen wie insbesondere alpha- und beta-Ketoestern wie beispielsweise Acetessigester oder Chloracetessigester.

Die Menge der eingesetzten Übergangsmetallverbindung oder des eingesetzten Übergangsmetallkomplexes kann dabei beispielsweise 0.001 bis 5 mol-%, bezogen auf das eingesetzte Substrat betragen, bevorzugt sind 0.01 bis 2 mol-%.

Die erfindungsgemäß herstellbaren enantiomerenangereicherten Verbindungen eignen sich insbesondere zur Herstellung von Agrochemikalien, Pharmazeutika oder Zwischenprodukten davon.

Der Vorteil vorliegender Erfindung ist, dass mit Hilfe der erfindungsgemäßen Katalysatoren Enantioselektivitäten und Aktivitäten erreicht werden, die bislang mit ähnlichen Katalysatoren nicht erzielbar waren.

### Beispiele

### Beispiel 1

### Herstellung von (S)-[5,5'-Dichlor-6,6'-dihydroxybiphenyl-2,2'-diyl]-bis(diphenylphosphinoxid)

In eine Lösung von 8 g (S)-[5,5'-Dichlor-6,6'-dimethoxybiphenyl-2,2'-diyl]bis(diphenyl-phosphinoxid) in 160 ml über CaH₂ getrocknetem Methylenchlorid, die in einem Rührgefäß unter Feuchtigkeitsausschluss auf -78°C gekühlt wurde, tropfte man 3,4 ml BBr₃ (= 8,77 g) unter Rühren ein und hielt die Reaktionsmischung 1 Stunde bei dieser Temperatur. Dann ließ man die Temperatur innerhalb von 2 Stunden auf Raumtemperatur ansteigen und rührte bei dieser Temperatur weitere 24 Stunden. Unter Eiskühlung wurden anschließend unter guter Durchmischung innerhalb 1 Stunde insgesamt 50 ml Wasser zugetropft, danach wurde das Methylenchlorid abdestilliert und nach Zugabe von weiteren 110 ml Wasser 6 Stunden unter Rühren bei 80°C gehalten. Nach dem Abkühlen auf RT wurde der entstandene Niederschlag über eine Glasfilterfritte abgesaugt, mit 100 ml Wasser und danach mit 200 ml Methylenchlorid unter intensiver Durchmischung ausgewaschen. Nach dem Trocknen des verbleibenden Produktes erhielt man 6,3 g (= 82 % d.Th.) reines (S)-[5,5'-Dichlor-6,6'-dihydroxybiphenyl-2,2'-diyl]bis(diphenyl-phosphinoxid), Fp. 236 - 237°C.

### Beispiel 2a

### Herstellung von (S)-[5,5'-Dichlor-6,6'-bis-(methoxycarbonyl-methoxy)-biphenyl-2,2'-diyl]-bis(diphenyl-phosphinoxid)

5 g (7,6 mmol) des nach Beispiel 1 hergestellten Produktes wurden zusammen mit 12,6 g (91,6 mmol) Kaliumcarbonat in 150 ml Dimethylformamid bei Raumtemperatur eine Stunde unter Verwendung eines gut wirksamen Rührers intensiv vermischt. Dann wurden 4,67 g (30,4 mmol) Bromessigsäuremethylester zugegeben und das Reaktionsgemisch unter Rühren weitere 36 Stunden bei Raumtemperatur gehalten. Danach wurde die Mischung filtriert, aus dem erhaltenen Filtrat im Rotationsverdampfer das Lösungsmittel im Vakuum abdestilliert und der Rückstand in 100 ml Dichlormethan gelöst. Diese Lösung wurde über 20 g Kieselgel filtriert und anschließend im Vakuum das Lösungsmittel entfernt. Man erhielt 5,61 g (92 % d.Th.) des (S)-Enantiomers der gewünschten Verbindung, Fp.: 69°C-72°C; [α]_{D} = +19° (c=1, CHCl₃).

### Beispiel 2b

### Herstellung von (S)-[5,5'-Dichlor-6,6'-bis-(ethoxycarbonyl-methoxy)-biphenyl-2,2'-diyl]-bis(diphenyl-phosphinoxid)

0,25 g (0,38 mmol) des nach Beispiel 1 hergestellten Produktes wurden zusammen mit 0,21 g (1,52 mmol) Kaliumcarbonat in 5 ml Dimethylformamid bei Raumtemperatur eine Stunde unter Verwendung eines gut wirksamen Rührers intensiv vermischt. Dann wurden 0,127 g (1,52 mmol) Bromessigsäureethylester zugegeben und das Reaktionsgemisch unter Rühren weitere 8 Stunden bei 80°C gehalten. Danach wurde die Mischung auf Raumtemperatur abgekühlt, filtriert und aus dem erhaltenen Filtrat im Rotationsverdampfer das Lösungsmittel im Vakuum abdestilliert. Das erhaltene Rohprodukt wurde durch Chromatographie gereinigt (Kieselgel Merck Typ 9385, Eluent: Hexan/Ethylacetat/Methanol, 2:3:0,5). Man erhielt 0,248 g reines (S)-[5,5'-Dichlor-6,6'-bis-(ethoxycarbonyl-methoxy)-biphenyl-2,2'-diyl]-bis(diphenylphosphinoxid), Fp.: 148°C-149°C; [α]_{D} = +24,1° (c=1, CHCl₃).

### Beispiele 3

### Herstellung von (S)-[6-Cyclohexyloxy-6'-hydroxy-biphenyl-2,2'-diyl]-bis(diphenylphosphinoxid) und (S)-[6-(Methoxycarbonylmethoxy)-6'-(cyclohexyloxy)-biphenyl-2,2'-diyl]-bis(diphenyl-phosphinoxid)

### Beispiel 3a

2,6 g (4,43 mmol) (S)-[6,6'-Dihydroxybiphenyl-2,2'-diyl]bis(diphenyl-phosphinoxid) das völlig analog zur Verbindung aus Beispiel 1 erhalten werden kann, 2,44 g (17,72 mmol) Kaliumcarbonat und 2,71 g (17,7 mmol) Cyclohexylbromid wurden in 30 ml Dimethylformamid bei Raumtemperatur 48 Stunden unter Rühren intensiv vermischt. Das Reaktionsgemisch wurde anschließend filtriert und das Filtrat im Vakuum in einem Rotationsverdampfer eingeengt. Das erhaltene Produkt wurde dreimal mit je 50 ml Dichlormethan extrahiert, die Lösung über Kieselgel filtriert und eingeengt. Man erhielt 3,2 g (93 % d.Th.) reines (S)-[6-Cyclohexyloxy-6'-hydroxy-biphenyl-2,2'-diyl]-bis(diphenyl-phosphinoxid). Fp.: 91°C-92°C; [α]_{D} = -35,2° (c=1, CHCl₃).

### Beispiel 3b

0,48 g (0,718 mmol) des nach Beispiel 3a erhaltenen Produktes, 0,198 g (1,43 mmol) Kaliumcarbonat und 0,218 g (1,43 mmol) Bromessigsäuremethylester wurden in 7 nl Dimethylformamid bei 80°C 6 Stunden unter Rühren intensiv vermischt. Das entstandene Reaktionsgemisch wurde analog Beispiel 3a aufgearbeitet und das erhaltene Rohprodukt durch Chromatographie gereinigt (Kieselgel Merck Typ 9385, Eluent: Ethylacetat/Methanol/Wasser, 75:5:1). Man erhielt 340 mg (64 % d.Th.) reines (S)-Enantiomer der gewünschten Verbindung. Fp.: 104°C-106°C, [α]_{D} = -68,1° (c=1, CHCl₃).

### Beispiel 4

### Herstellung von (S)-[5,5'-Dichlor-6,6'-bis-(1-methoxycarbonyl-ethoxy)-biphenyl-2,2'-diyl]-bis(diphenyl-phosphinoxid)

0,25 g (0,38 mmol) der Verbindung aus Beispiel 1, 0,21 g (1,52 mmol) Kaliumcarbonat und 0,253 g (0,152 mmol) racemischer 2-Brompropionsäuremethylester wurden in 5 ml Dimethylformamid bei 80°C 6 Stunden durch Rühren intensiv vermischt.

Anschließend wurde analog zu Beispiel 3b aufgearbeitet und das Gemisch der Reaktionsprodukte durch Chromatographie getrennt.

Man erhielt 2 reine Stereoisomere der nachstehenden Formel:
94 mg, Fp.: 201°C-202°C, [α]_{D} = -32,9° (c=0,8, CHCl₃), [(S)(R,R) oder (S),(S,S) Enantiomer].
55 mg, Fp. 108°C-110°C, [α]_{D} = -36,7° (c=0,8, CHCl₃), [(S)(R,S)-Enantiomer) und
75 mg eines Gemisches dieser beiden Stereoisomeren.

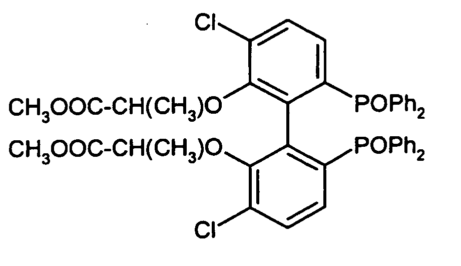

### Beispiel 5

### Herstellung von (S)-[5,5'-Dichlor-6,6'-bis-(methoxycarbonyl-methoxy)-biphenyl-2,2'-diyl]-bis(diphenyl-phosphin)

Das Phosphinoxid aus Beispiel 2a (0,686 g, 0,86 mmol) wurde mit Xylol (18 ml) unter Argon vorgelegt, die resultierende Mischung zunächst mit Tri-(n-butyl)amin (3,5 ml, 15 mmol) und Trichlorsilan (1,5 ml, 15 mmol) versetzt und dann für 2 Stunden unter Rückfluss erhitzt. Es wurde abkühlen gelassen, mit entgaster NaOH-Lösung (30 %, 15 ml) kurz nachgerührt, 25 ml entgastes Wasser zugegeben und die Phasen getrennt. Die wässrige Phase wurde 3 mal mit Methyl-tert.-butylether (10 ml) extrahiert und die vereinigten organischen Phasen zunächst mit ges. Kochsalzlösung gewaschen und dann über MgSO₄ getrocknet. Das organische Lösungsmittel wurde im Vakuum entfernt und man erhielt das Produkt als farbloses Pulver.
Ausbeute: 95 % d.Th.
³¹P-NMR: - 13,4 ppm.

### Beispiel 6

### Herstellung von (S)-[5,5'-Dichlor-6,6'-bis-(ethoxycarbonyl-methoxy)-biphenyl-2,2'-diyl]-bis(diphenyl-phosphin)

Das Phosphinoxid aus Beispiel 2b wurde völlig analog zu Beispiel 5 reduziert und in einer Ausbeute von 92 % erhalten.

### Beispiel 7

### Herstellung von (S)-[6-(Methoxycarbonylmethoxy)-6'-(cyclohexyloxy)-biphenyl-2,2'-diyl]-bis(diphenyl-phosphin)

Das Phosphinoxid aus Beispiel 3b wurde völlig analog zu Beispiel 5 reduziert und in einer Ausbeute von 91 % erhalten.

### Beispiel 8

### Herstellung von (S)-[5,5'-Dichlor-6,6'-bis-(1-methoxycarbonyl-ethoxy)-biphenyl-2,2'-diyl]-bis(diphenyl-phosphin)

Das Phosphinoxid aus Beispiel 4 wurde völlig analog zu Beispiel 5 reduziert und in einer Ausbeute von 94 % erhalten.

### Enantioselektive Hydrierung von Acetessigsäuremethylester (S2)

### Beispiel 11

(S)-[5,5'-Dichlor-6,6'-bis-(methoxycarbonyl-methoxy)-biphenyl-2,2'-diyl]-bis(diphenyl-phosphin) (5,3 mg, 0,02 mol %) aus Beispiel 5, RuCl₃ (1,4 mg, 0,01 mol-%) und 4 g **S2** wurden in Ethanol (10ml) vorgelegt und die Mischung unter einem Wasserstoffdruck von 90 bar für 1 h auf 80 °C erhitzt. Nach dieser Zeit wurde eine Enantiomerenreinheit des Produktes von **97,8 % ee** ermittelt.

### Beispiel 12

(S)-[6-(Methoxycarbonylmethoxy)-6'-(cyclohexyloxy)-biphenyl-2,2'-diyl]-bis(diphenyl-phosphin) (4,9 mg, 0,02 mol %) aus Beispiel 7, RuCl₃ (1,4 mg, 0,01 mol-%) und 4 g **S2** wurden in Ethanol (10ml) vorgelegt und die Mischung unter einem Wasserstoffdruck von 90 bar für 1 h auf 80 °C erhitzt. Nach dieser Zeit wurde eine Enantiomerenreinheit des Produktes von **97,4 % ee** ermittelt.

### Beispiel 13 (zum Vergleich)

(S)-[5,5'-Dichlor-6,6'-dimethoxy-biphenyl-2,2'-diyl]-bis(diphenyl)-phosphin (4,5 mg, 0,02 mol %), RuCl₃ (1,4 mg, 0,01 mol-%) und 4 g **S2** wurden Ethanol (10ml) vorgelegt und die Mischung unter einem Wasserstoffdruck von 90 bar für 1 h auf 80 °C erhitzt. Nach dieser Zeit wurde eine Enantiomerenreinheit des Produktes von **96,4 % ee** ermittelt.

## Patentansprüche

1. Verbindungen der Formel (I), 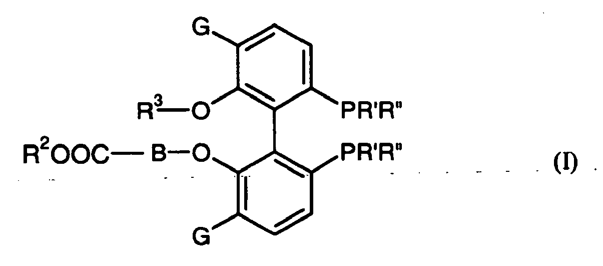 in der
B für CHR¹, wobei R¹ für Wasserstoff oder C₁-C₄₋Alkyl steht und
R² für Methyl, Ethyl, n-Propyl, iso-Propyl, n-Butyl oder tert.-Butyl und
R³ für C₁-C₆-Alkyl oder B-COOR² und
G für Chlor oder Wasserstoff und
R' und R" jeweils unabhängig voneinander, oder jeweils identisch für C₃-C₈-Alkyl oder C₅-C₁₀-Aryl, das nicht, einfach oder mehrfach mit Resten substituiert ist, die ausgewählt sind aus der Gruppe Chlor, Fluor, Cyano, Phenyl, C₁-C₆-Alkoxy und C₁-C₆-Alkyl, besonders bevorzugt für Cyclopentyl, Cyclohexyl, Cycloheptenyl, Phenyl, o-, m-, p-Tolyl, 3,5-Dimethylphenyl, 3,5-Di-tert.-butylphenyl, 3,5-Dimethyl-4-meth-oxyphenyl, 3,5-Di-tert.-butyl-4-methylphenyl, 4-Trifluormethylphenyl, 4-Fluorphenyl, 2-, 3-Furyl, 2-, 3-Thiophen-yl, 2-N-Methyl-pyrrolyl, N-Methyl-2-indolyl und 2- Thiazolyl, stehen.

2. Folgende Verbindungen nach Anspruch 1:
(R)- und (S)-[5,5'-Dichlor-6,6'-bis(1-methoxycarbonyl-ethoxy)-biphenyl-2,2'-diyl]-bis-[(di-phenyl)phosphin, (R)- und (S)-[5,5'-Dichlor-6,6'-bis(1-ethoxycarbonyl-ethoxy)-biphenyl-2,2'-diyl]-bis-[(di-phenyl)phosphin, (R)- und (S)-[5,5'-Dichlor-6,6'-bis(methoxycarbonyl-methoxy)-biphenyl-2,2'-diyl]-bis-[(diphenyl)phosphin, (R)- und (S)-[5,5'-Dichlor-6,6'-bis(ethoxycarbonyl-meth-oxy)-biphenyl-2,2'-diyl]-bis-[(di-phenyl)phosphin, (R)- und (S)-[5,5'-Dichlor-6-(methoxycarbonyl-methoxy)-6'-(cyclohexyloxy)-biphenyl-2,2'-diyl]-bis-[(di-phenyl)phosphin, (R)- und (S)-[5,5'-Dichlor-6-(ethoxycarbonyl-methoxy)-6'-(cyclohexyloxy)biphenyl-2,2'-diyl]-bis-[(di-phenyl)phosphin,
(R)- und (S)-[5,5'-Dichlor-6,6'-bis(1-methoxycarbonyl-ethoxy)-biphenyl-2,2'-diyl]-bis-[(di-cyclohexyl)phosphin, (R)- und (S)-[5,5'-Dichlor-6,6'-bis(1-ethoxycarbonyl-ethoxy)-biphenyl-2,2'-diyl]-bis-[(di-cyclohexyl)phosphin, (R)- und (S)-[5,5'-Dichlor-6,6'-bis(methoxycarbonyl-methoxy)-biphenyl-2,2'-diyl]-bis-[(di-cyclohexyl)phosphin, (R)- und (S)-[5,5'-Dichlor-6,6'-bis(ethoxycarbonyl-methoxy)-biphenyl-2,2'-diyl]-bis-[(di-cyclohexyl)phosphin, (R)- und (S)-[5,5'-Dichlor-6-(methoxycarbonyl-methoxy)-6'-(cyclohexyloxy)-biphenyl-2,2'-diyl]-bis-[(di-cyclohexyl)phosphin, (R)- und (S)-[5,5'-Dichlor-6-(ethoxycarbonyl-methoxy)-6'-(cyclohexyloxy)biphenyl-2,2'-diyl]-bis-[(dicyclohexyl)phosphin,
(R)- und (S)-[5,5'-Dichlor-6,6'-bis(1-methoxycarbonyl-ethoxy)-biphenyl-2,2'-diyl]-bis-[(di-3,5-di-tert.-butyl-4-methoxyphenyl)phosphin, (R)- und (S)-[5,5'-Dichlor-6,6'-bis(1-ethoxycarbonyl-ethoxy)-biphenyl-2,2'-diyl]-bis-[(di-3,5-di-tert.-butyl-4-methoxyphenyl)phosphin, (R)- und (S)-[5,5'-Dichlor-6,6'-bis(methoxycarbonyl-methoxy)-biphenyl-2,2'-diyl]-bis-[(di-3,5-di-tert.-butyl-4-methoxyphenyl)phosphin, (R)- und (S)-[5,5'-Dichlor-6,6'-bis(ethoxycarbonyl-methoxy)-biphenyl-2,2'-diyl]-bis-[(di-3,5-di-tert.-butyl-4-methoxyphenyl)phosphin, (R)- und (S)-[5,5'-Dichlor-6-(methoxycarbonyl-methoxy)-6'-(cyclohexyloxy)-biphenyl-2,2'-diyl]-bis-[(di-3,5-di-tert.-butyl-4-methoxyphenyl)phosphin, (R)- und (S)-[5,5'-Dichlor-6-(ethoxycarbonyl-methoxy)-6'-(cyclohexyloxy)biphenyl-2,2'-diyl]-bis-[(di-3,5-di-tert.-butyl-4-methoxyphenyl)phosphin,
(R)- und (S)-[5,5'-Dichlor-6,6'-bis(1-methoxycarbonyl-ethoxy)-biphenyl-2,2'-diyl]-bis-[(di-3,5-dimethyl-4-methoxyphenyl)phosphin, (R)- und (S)-[5,5'-Dichlor-6,6'-bis(1-ethoxycarbonyl-ethoxy)-biphenyl-2,2'-diyl]-bis-[(di-3,5-dimethyl-4-methoxyphenyl)phosphin, (R)- und (S)-[5,5'-Dichlor-6,6'-bis-(methoxycarbonyl-methoxy)-biphenyl-2,2'-diyl]-bis-[(di-3,5-dimethyl-4-methoxyphenyl)phosphin, (R)- und (S)-[5,5'-Dichlor-6,6'-bis(ethoxycarbonyl-methoxy)-biphenyl-2,2'-diyl]-bis-[(di-3,5-dimethyl-4-methoxyphenyl)phosphin, (R)- und (S)-[5,5'-Dichlor-6-(methoxycarbonyl-methoxy)-6'-(cyclo-hexyloxy)-biphenyl-2,2'-diyl]-bis-[(di-3,5-dimethyl-4-methoxyphenyl)phosphin, (R)- und (S)-[5,5'-Dichlor-6-(ethoxycarbonyl-methoxy)-6'-(cyclohexyl-oxy)biphenyl-2,2'-diyl]-bis-[(di-3,5-dimethyl-4-methoxyphenyl)phosphin,
(R)- und (S)-[5,5'-Dichlor-6,6'-bis(1-methoxycarbonyl-ethoxy)-biphenyl-2,2'-diyl]-bis-[(di-3,5-di-tert.-butylphenyl)phosphin, (R)- und (S)-[5,5'-Dichlor-6,6'-bis(1-ethoxycarbonyl-ethoxy)-biphenyl-2,2'-diyl]-bis-[(di-3,5-di-tert.-butylphenyl)phosphin, (R)- und (S)-[5,5'-Dichlor-6,6'-bis(methoxycarbonyl-methoxy)-biphenyl-2,2'-diyl]-bis-[(di-3,5-di-tert.-butylphenyl)phosphin, (R)- und (S)-[5,5'-Dichlor-6,6'-bis(ethoxycarbonyl-methoxy)-biphenyl-2,2'-diyl]-bis-[(di-3,5-di-tert.-butylphenyl)phosphin, (R)- und (S)-[5,5'-Dichlor-6-(methoxycarbonyl-methoxy)-6'-(cyclohexyloxy)-biphenyl-2,2'-diyl]-bis-[(di-3,5-di-tert.-butylphenyl)phosphin, (R)- und (S)-[5,5'-Dichlor-6-(ethoxycarbonyl-methoxy)-6'-(cyclohexyloxy)biphenyl-2,2'-diyl]-bis-[(di-3,5-di-tert.-butylphenyl)phosphin,
(R)- und (S)-[5,5'-Dichlor-6,6'-bis(1-methoxycarbonyl-ethoxy)-biphenyl-2,2'-diyl]-bis-[(di-4-fluorphenyl)phosphin, (R)- und (S)-[5,5'-Dichlor-6,6'-bis(1-ethoxycarbonyl-ethoxy)-biphenyl-2,2'-diyl]-bis-[(di-4-fluorphenyl)phosphin,
(R)- und (S)-[5,5'-Dichlor-6,6'-bis(methoxycarbonyl-methoxy)-biphenyl-2,2'-diyl]-bis-[(di-4-fluorphenyl)phosphin, (R)- und (S)-[5,5'-Dichlor-6,6'-bis-(ethoxycarbonyl-methoxy)-biphenyl-2,2'-diyl]-bis-[(di-4-fluorphenyl)phosphin, (R)- und (S)-[5,5'-Dichlor-6-(methoxycarbonyl-methoxy)-6'-(cyclo-hexyloxy)-biphenyl-2,2'-diyl]-bis-[(di-4-fluorphenyl)phosphin sowie (R)- und (S)-[5,5'-Dichlor-6-(ethoxycarbonyl-methoxy)-6'-(cyclohexyloxy)biphenyl-2,2'-diyl]-bis-[(di-4-fluorphenyl)phosphin,
sowie die analogen in 5,5'-Position unsubstituierten Verbindungen und im Falle eines stereogenen Zentrums in den in 6 und/oder 6'-Position gebundenen Resten auch die entsprechenden in den genannten Resten (R)-und (S)-konfigurierten Verbindungen.

3. Verfahren zur Herstellung von Verbindungen gemäß einem der Ansprüche 1 und 2, **dadurch gekennzeichnet, dass**
• in einem Schritt a)
Verbindungen der Formel (II) 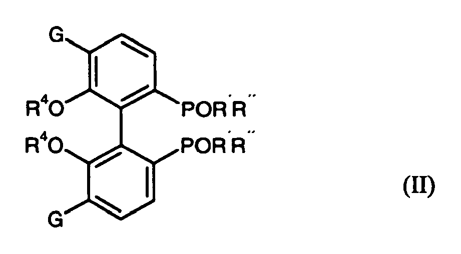 durch Etherspaltung in Verbindungen der Formel (III) überführt werden, 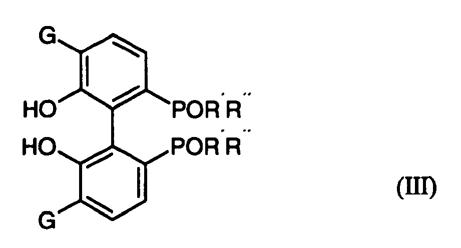
• in einem Schritt b1)
die Verbindungen der Formel (III) durch Umsetzung mit Verbindungen der Formel (IV)
R³-Akt (IV)
in Gegenwart von Base zu Verbindungen der Formel (V) umgesetzt werden, 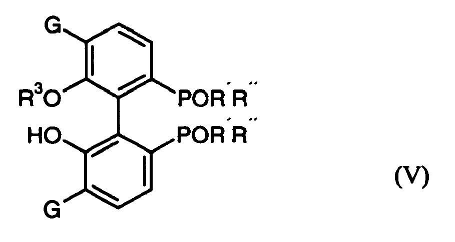
• in einem Schritt b2)
die Verbindungen der Formel (V) durch Umsetzung mit Verbindungen der Formel (VI)
R²OOC-B-Akt (VI)
in Gegenwart von Base zu Verbindungen der Formel (VII) umgesetzt werden, 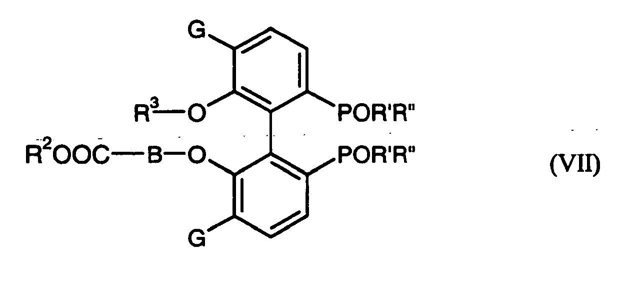
• und in einem Schritt c)
die Verbindungen der Formel (VII) zu Verbindungen der Formel (I) reduziert werden,
wobei in den genannten Formeln B, R², R³, G, R' und R" die gleichen Bedeutungen besitzen, die unter der Formel (I) in Anspruch 1 definiert wurde und
Akt für Halogen oder ein Sulfonat steht und
R⁴ in Formel (II) für C₁-C₆-Alkyl steht.

4. Verbindungen der Formel (VII) 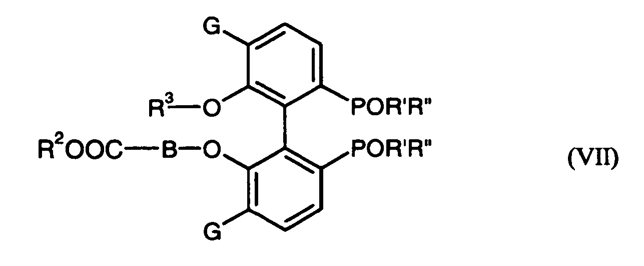 wobei B, R², R³ , G, R' und R" die gleichen Bedeutungen besitzen, die unter der Formel (I) in Anspruch 1 definiert wurde.

5. Verbindungen der Formel (V) 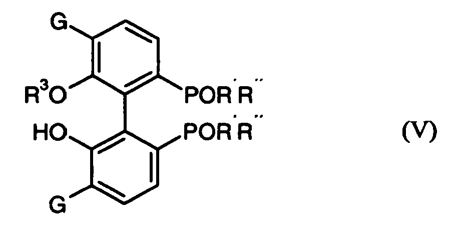 wobei R³, G, R' und R" die gleichen Bedeutungen besitzen, die unter der Formel (I) in Anspruch 1 definiert wurde.

6. Übergangsmetallkomplexe enthaltend Verbindungen der Formel (I) gemäß Anspruch 1.

7. Katalysatoren, enthaltend Übergangsmetallkomplexe gemäß Anspruch 6.

8. Verfahren zur übergangsmetallkatalysierten Herstellung von enantiomerenangereicherten Verbindungen, **dadurch gekennzeichnet, dass** als Katalysatoren solche gemäß Anspruch 7 verwendet werden.

## Claims

1. Compounds of formula (I), 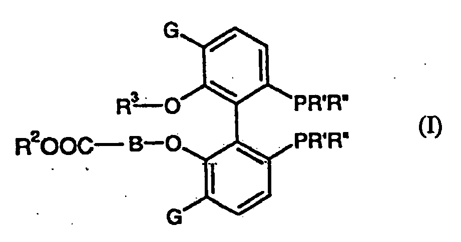 wherein
B denotes CHR¹ wherein R¹ denotes hydrogen or C₁-C₄-alkyl and
R² denotes methyl, ethyl, n-propyl, iso-propyl, n-butyl or tert. butyl and
R³ denotes C₁-C₆-alkyl or B-COOR² and
G denotes chlorine or hydrogen and
R' and R" each independently of one another or each identically denote C₃₋₈-alkyl or C₅-C₁₀-aryl, which is unsubstituted or mono- or polysubstituted by groups selected from among chlorine, fluorine, cyano, phenyl, C₁-C₆-alkoxy and C₁-C₆-alkyl, particularly preferably cyclopentyl, cyclohexyl, cycloheptenyl, phenyl, o-, m-, p-tolyl, 3,5-dimethylphenyl, 3,5-di-tert.butylphenyl, 3,5-dimethyl-4-methoxyphenyl, 3,5-di-tert.butyl-4-methylphenyl, 4-trifluoromethylphenyl, 4-fluorophenyl, 2-, 3-furyl, 2-, 3-thiophenyl, 2-N-methyl-pyrrolyl, N-methyl-2-indolyl and 2-thiazolyl.

2. The following compounds according to Claim 1:
(R)- and (S)-[5,5'-dichloro-6,6'-bis(1-methoxycarbonyl-ethoxy)-biphenyl-2,2'-diyl]-bis-[(di-phenyl)phosphine, (R)- and (S)-[5,5'-dichloro-6,6'-bis(1-ethoxycarbonyl-ethoxy)-biphenyl-2,2'-diyl]-bis-[(di-phenyl)phosphine, (R)- and (S)-[5,5'-dichloro-6,6'-bis(methoxycarbonyl-methoxy)-biphenyl-2,2'-diyl]-bis-[(diphenyl)phosphine, (R)- and (S)-[5,5'-dichloro-6,6'-bis(ethoxycarbonyl-methoxy)-biphenyl-2,2'-diyl]-bis-[(di-phenyl)phosphine, (R)- and (S)-[5,5'-dichloro-6-(methoxycarbonyl-methoxy)-6'-(cyclohexyloxy)-biphenyl-2,2'-diyl]-bis-[(di-phenyl)phosphine, (R)- and (S)-[5,5'-dichloro-6-(ethoxycarbonylmethoxy)-6'-(cyclohexyloxy)biphenyl-2,2'-diyl]-bis-[(diphenyl)phosphine,
(R)- and (S)-[5,5'-dichloro-6,6'-bis(1-methoxycarbonyl-ethoxy)-biphenyl-2,2'-diyl]-bis-[(di-cyclohexyl)phosphine, (R)- and (S)-[5,5'-dichloro-6,6'-bis(1-ethoxycarbonyl-ethoxy)-biphenyl-2,2'-diyl]-bis-[(di-cyclohexyl)phosphine, (R)- and (S)-[5,5'-dichloro-6,6'-bis(methoxycarbonyl-methoxy)-biphenyl-2,2'-diyl]-bis-[(di-cyclohexyl)phosphine, (R)- and (S)-[5,5'-dichloro-6,6'-bis(ethoxycarbonyl-methoxy)-biphenyl-2,2'-diyl]-bis-[(di-cyclohexyl)phosphine, (R)- and (S)-[5,5'-dichloro-6-(methoxycarbonyl-methoxy)-6'-(cyclohexyloxy)-biphenyl-2,2'-diyl]-bis-[(di-cyclohexyl)phosphine, (R)- and (S)-[5,5'-dichloro-6-(ethoxycarbonyl-methoxy)-6'-(cyclohexyloxy)biphenyl-2,2'-diyl]-bis-[(dicyclohexyl)phosphine,
(R)- and (S)-[5,5'-dichloro-6,6'-bis(1-methoxycarbonyl-ethoxy)-biphenyl-2,2'-diyl]-bis-[(di-3,5-di-tert,-butyl-4-methoxyphenyl)phosphine, (R)- and (S)-[5,5'-dichloro-6,6'-bis(1-ethoxycarbonyl-ethoxy)-biphenyl-2,2'-diyl]-bis-[(di-3,5-ditert.-butyl-4-methoxyphenyl)phosphine, (R)- and (S)-[5,5'-dichloro-6,6'-bis(methoxycarbonyl-methoxy)-biphenyl-2,2'-diyl]-bis-[(di-3,5-di-tert.-butyl-4-methoxyphenyl)phosphine, (R)- and (S)-[5,5'-dichloro-6,6'-bis(ethoxycarbonyl-methoxy)-biphenyl-2,2'-diyl]-bis-[(di-3,5-di-tert.-butyl-4-methoxyphenyl)phosphine, (R)- and (S)-[5,5'-dichloro-6-(methoxycarbonyl-methoxy)-6'-(cyclohexyloxy)-biphenyl-2,2'-diyl]-bis-[(di-3,5-di-tert.-butyl-4-methoxyphenyl)phosphine, (R)- and (S)-[5,5'-dichloro-6-(ethoxycarbonyl-methoxy)-6'-(cyclohexyloxy)biphenyl-2,2'-diyl]-bis-[(di-3,5-di-tert.-butyl-4-methoxyphenyl)phosphine,
(R)- and (S)-[5,5'-dichloro-6,6'-bis(1-methoxycarbonyl-ethoxy)-biphenyl-2,2'-diyl]-bis-[(di-3,5-dimethyl-4-methoxyphenyl)phosphine, (R)- and (S)-[5,5'-dichloro-6,6'-bis(1-ethoxycarbonyl-ethoxy)-biphenyl-2,2'-diyl]-bis-[(di-3,5-dimethyl-4-methoxyphenyl)phosphine, (R)- and (S)-[5,5'-dichloro-6,6'-bis-(methoxycarbonyl-methoxy)-biphenyl-2,2'-diyl]-bis-[(di-3,5-dimethyl-4-methoxyphenyl)phosphine, (R)- and (S)-[5,5'-dichloro-6,6'-bis(ethoxycarbonylmethoxy)-biphenyl-2,2'-diyl]-bis-[(di-3,5-dimethyl-4-methoxyphenyl)phosphine, (R)- and (S)-[5,5'-dichloro-6-(methoxycarbonyl-methoxy)-6'-(cyclohexyloxy)-biphenyl-2,2'-diyl]-bis-[(di-3,5-dimethyl-4-methoxyphenyl)phosphine, (R)- and (S)-[5,5'-dichloro-6-(ethoxycarbonyl-methoxy)-6'-(cyclohexyloxy)biphenyl-2,2'-diyl]-bis-[(di-3,5-dimethyl-4-methoxyphenyl)phosphine,
(R)- and (S)-[5,5'-dichloro-6,6'-bis(1-methoxycarbonyl-ethoxy)-biphenyl-2,2'-diyl]-bis-[(di-3,5-di-tert-butylphenyl)phosphine, (R)- and (S)-[5,5'-dichloro-6,6'-bis(1-ethoxycarbonyl-ethoxy)-biphenyl-2,2'-diyl]-bis-[(di-3,5-di-tert.butylphenyl)phosphine, (R)- and (S)-[5,5'-dichloro-6,6'-bis(methoxycarbonylmethoxy)-biphenyl-2,2'-diyl]-bis-[(di-3,5-di-tert.-butylphenyl)phosphine, (R)-and (S)-[5,5'-dichloro-6,6'-bis(ethoxycarbonyl-methoxy)-biphenyl-2,2'-diyl]-bis-[(di-3,5-di-tert.-butylphenyl)phosphine, (R)- and (S)-[5,5'-dichloro-6-(methoxycarbonyl-methoxy)-6'-(cyclohexyloxy)-biphenyl-2,2'-diyl]-bis-[(di-3,5-ditert.-butylphenyl)phosphine, (R)- and (S)-[5,5'-dichloro-6-(ethoxycarbonylmethoxy)-6'-(cyclohexyloxy)biphenyl-2,2'-diyl]-bis-[(di-3,5-di-tert.butylphenyl)phosphine,
(R)- and (S)-[5,5'-dichloro-6,6'-bis(1-methoxycarbonyl-ethoxy)-biphenyl-2,2'-diyl]-bis-[(di-4-fluorophenyl)phosphine, (R)- and (S)-[5,5'-dichloro-6,6'-bis(1-ethoxycarbonyl-ethoxy)-biphenyl-2,2'-diyl]-bis-[(di-4-fluorophenyl)phosphine,(R)-and (S)-[5,5'-dichloro-6,6'-bis(methoxycarbonyl-methoxy)-biphenyl-2,2'-diyl]-bis-[(di-4-fluorophenyl)phosphine, (R)- and (S)-[5,5'-dichloro-6,6'-bis-(ethoxycarbonyl-methoxy)-biphenyl-2,2'-diyl]-bis-[(di-4-fluorophenyl)phosphine, (R)- and (S)-[5,5'-dichloro-6-(methoxycarbonyl-methoxy)-6'-(cyclohexyloxy)-biphenyl-2,2'-diyl]-bis-[(di-4-fluorophenyl)phosphine and (R)- and (S)-[5,5'-dichloro-6-(ethoxycarbonyl-methoxy)-6'-(cyclohexyloxy)biphenyl-2,2'-diyl]-bis-[(di-4-fluorophenyl)phosphine, and the analogous compounds that are unsubstituted in the 5,5' position and in the event of a stereogenic centre in the groups that are bound in the 6 and/or 6' position the corresponding compounds that are in the (R) and (S) configuration in the above-mentioned groups.

3. Process for preparing compounds according to one of claims 1 and 2, **characterised in that**
• in a step a)
compounds of formula (II) 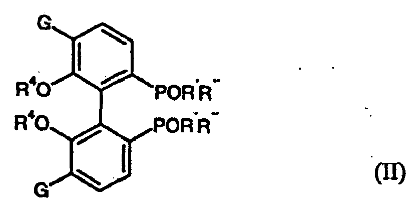 are converted by ether splitting into compounds of formula (III), 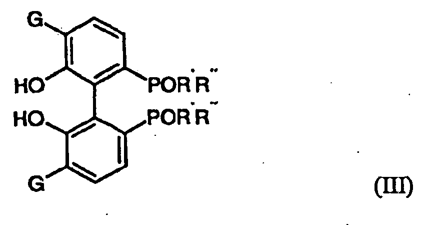
• in a step b1)
the compounds of formula (III) are converted by reaction with compounds of formula (IV)
R³-Akt (IV)
in the presence of a base into compounds of formula (V), 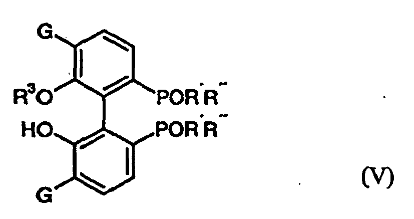
• in a step b2)
the compounds of formula (V) are converted by reaction with compounds of formula (VI)
R²OOC-B-Akt (VI)
in the presence of a base into compounds of formula (VII), 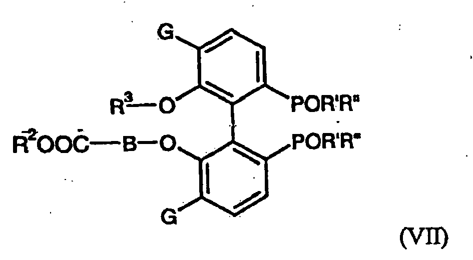
• and in a step c)
the compounds of formula (VII) are reduced to form compounds of formula (I),
while in the above-mentioned formulae B, R², R³, G, R' and R" have the same meanings as defined under formula (I) in Claim 1 and
Akt denotes halogen or a sulphonate and
R⁴ in formula (II) denotes C₁-C₆-alkyl.

4. Compounds of formula (VII) 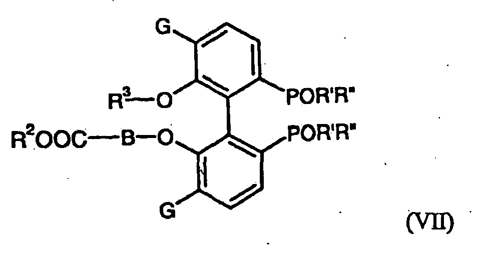 wherein B, R², R³, G, R' and R" have the same meanings as defined under formula (I) in Claim 1.

5. Compounds of formula (V) 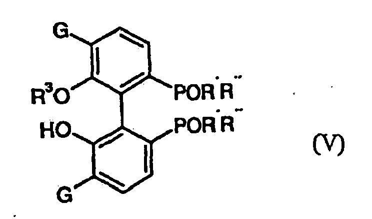 wherein R³, G, R' and R" have the same meanings as defined under formula (I) in Claim 1.

6. Transition metal complexes containing compounds of formula (I) according to claim 1.

7. Catalysts containing transition metal complexes according to Claim 6.

8. Process for the transition metal-catalysed preparation of enantiomer-enriched compounds, **characterised in that** the catalysts used are those claimed in Claim 7.

## Revendications

1. Composés de formule (I) 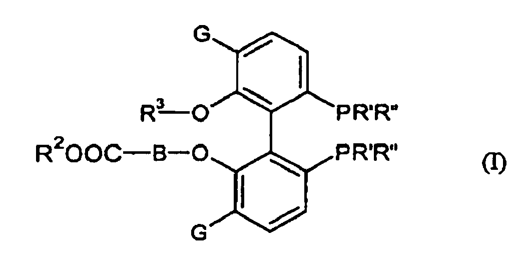 où
B représente CHR¹ où R¹ représente l'hydrogène ou C₁-C₄-alkyle et
R² représente méthyle, éthyle, n-propyle, isopropyle, n-butyle ou tert.-butyle et R³ représente C₁-C₆-alkyle ou B-COOR² et
G représente le chlore ou l'hydrogène et
R' et R" représentent chacun indépendamment les uns des autres, ou chacun de manière identique, C₃-C₈-alkyle ou C₅-C₁₀-aryle qui est non substitué, ou substitué une fois ou plusieurs fois avec des groupements qui sont choisis dans le groupe chlore, fluor, cyano, phényle, C₁-C₆-alcoxy et C₁-C₆-alkyle, de manière particulièrement préférée représentent cyclopentyle, cyclohexyle, cycloheptényle, phényle, o-, m-, p-tolyle, 3,5-diméthylphényle, 3,5-di-tert.-butylphényle, 3,5-diméthyl-4-méthoxyphényle, 3,5-di-tert.-butyl-4-méthylphényle, 4-trifluorométhylphényle, 4-fluorophényle, 2-, 3-furyle, 2-, 3-thiophényle, 2-N-méthyl-pyrrolyle, N-méthyl-2-indolyle et 2-thiazolyle.

2. Composés selon la revendication 1 suivants :
(R)- et (S)-[5,5'-dichloro-6,6'-bis(1-méthoxycarbonyl-éthoxy)-biphényl-2,2'-diyl]-bis-[(di-phényl)phosphine, (R)- et (S)-[5,5'-dichloro-6,6'-bis(1-éthoxycarbonyl-éthoxy)-biphényl-2,2'-diyl]-bis-[(di-phényl)phosphine, (R)- et (S)-[5,5'-dichloro-6,6'-bis(méthoxycarbonyl-méthoxy)-biphényl-2,2'-diyl]-bis-[(di-phényl)phosphine, (R)- et (S)-[5,5'-dichloro-6,6'-bis(éthoxycarbonyl-méthoxy)-biphényl-2,2'-diyl]-bis-[(di-phényl)phosphine, (R)- et (S)-[5,5'-dichloro-6-(méthoxycarbonyl-méthoxy)-6'-(cyclohexyloxy)-biphényl-2,2'-diyl]-bis[(di-phényl)phosphine, (R)- et (S)-[5,5'-dichloro-6-(éthoxycarbonylméthoxy)-6'-(cyclohexyloxy)biphényl-2,2'-diyl]-bis-[(di-phényl)phosphine,
(R)- et (S)-[5,5'-dichloro-6,6'-bis(1-méthoxycarbonyl-éthoxy)-biphényl-2,2'-diyl]-bis-[(di-cyclohexyl)phosphine, (R)- et (S)-[5,5'-dichloro-6,6'-bis(1-éthoxycarbonyl-éthoxy)-biphényl-2,2'-diyl]-bis-[(di-cyclohexyl)phosphine, (R)- et (S)-[5,5'-dichloro-6,6'-bis(méthoxycarbonyl-méthoxy)-biphényl-2,2'-diyl]-bis-[(di-cyclohexyl)phosphine, (R)- et (S)-[5,5'-dichloro-6,6'-bis(éthoxycarbonyl-méthoxy)-biphényl-2,2'-diyl]-bis-[(di-cyclohexyl)phosphine, (R)- et (S)-[5,5'-dichloro-6-(méthoxycarbonyl-méthoxy)-6'-(cyclohexyloxy)biphényl-2,2'-diyl]-bis-[(di-cyclohexyl)phosphine, (R)- et (S)-[5,5'-dichloro-6-(éthoxycarbonyl-méthoxy)-6-(cyclohexyloxy)biphényl-2,2'-diyl]-bis-[(dicyclohexyl)phosphine,
(R)- et (S)-[5,5'-dichloro-6,6'-bis(1-méthoxycarbonyl-éthoxy)-biphényl-2,2'-diyl]-bis-[(di-3,5-di-tert.-butyl-4-méthoxyphényl)phosphine, (R)- et (S)-[5,5'-dichloro-6,6'-bis(1-éthoxycarbonyl-éthoxy)-biphényl-2,2'-diyl]-bis-[(di-3,5-di-tert.-butyl-4-méthoxyphényl)phosphine, (R)- et (S)-[5,5'-dichloro-6,6'-bis(méthoxycarbonyl-méthoxy)-biphényl-2,2'-diyl]-bis-[(di-3,5-di-tert.-butyl-4-méthoxyphényl)-phosphine, (R)- et (S)-[5,5'-dichloro-6,6'-bis(éthoxycarbonyl-méthoxy)-biphényl-2,2'-diyl]-bis-[(di-3,5-di-tert.-butyl-4-méthoxy-phényl)phosphine, (R)- et (S)-[5,5'-dichloro-6-(méthoxycarbonyl-méthoxy)-6'-(cyclohexyloxy)-biphényl-2,2'-diyl]-bis-[(di-3,5-di-tert.-butyl-4-méthoxy-phényl)phosphine, (R)- et (S)-[5,5'-dichloro-6-(éthoxycarbonyl-méthoxy)-6'-(cyclohexyloxy)biphényl-2,2'-diyl]-bis-[(di-3,5-di-tert.-butyl-4-méthoxyphényl)phosphine,
(R)- et (S)-[5,5'-dichloro-6,6'-bis(1-méthoxycarbonyl-éthoxy)-biphényl-2,2'-diyl]-bis-[(di-3,5-diméthyl-4-méthoxyphényl)phosphine, (R)- et (S)-[5,5'-dichloro-6,6'-bis(1-éthoxycarbonyl-éthoxy)-biphényl-2,2'-diyl]-bis-[(di-3,5-diméthyl-4-méthoxyphényl)phosphine, (R)- et (S)-[5,5'-dichloro-6,6'-bis(méthoxycarbonyl-méthoxy)-biphényl-2,2'-diyl]-bis-[(di-3,5-diméthyl-4-méthoxyphényl)phosphine,
(R)- et (S)-[5,5'-dichloro-6,6'-bis(éthoxycarbonylméthoxy)-biphényl-2,2'-diyl]-bis-[(di-3,5-diméthyl-4-méthoxyphényl)phosphine, (R)- et (S)-[5,5'-dichloro-6-(méthoxycarbonyl-méthoxy)-6'-(cyclohexyloxy)-biphényl-2,2'-diyl]-bis-[(di-3,5-diméthyl-4-méthoxyphényl)phosphine, (R)- et (S)-[5,5'-dichloro-6-(éthoxy-carbonyl-méthoxy)-6'-(cyclohexyloxy)biphényl-2,2'-diyl]-bis-[(di-3,5-diméthyl-4-méthoxyphényl)phosphine,
(R)- et (S)-[5,5'-dichloro-6,6'-bis(1-méthoxycarbonyl-éthoxy)-biphényl-2,2'-diyl]-bis-[(di-3,5-di-tert.-butylphényl)phosphine, (R)- et (S)-[5,5'-dichloro-6,6'-bis(1-éthoxycarbonyl-éthoxy)-biphényl-2,2'-diyl]-bis-[(di-3,5-di-tert.-butylphényl)-phosphine, (R)- et (S)-[5,5'-dichloro-6,6'-bis(méthoxycarbonylméthoxy)-biphényl-2,2'-diyl]-bis-[(di-3,5-di-tert.-butylphényl)phosphine, (R) et (S)-[5,5'-dichloro-6,6'-bis(éthoxycarbonyl-méthoxy)-biphényl-2,2'-diyl]-bis-[(di-3,5-di-tert.-butylphényl)phosphine, (R)- et (S)-[5,5'-dichloro-6-(méthoxycarbonyl-méthoxy)-6'-(cyclohexyloxy)-biphényl-2,2'-diyl]-bis-[(di-3,5-di-tert.-butylphényl)phosphine, (R)- et (S)-[5,5'-dichloro-6-(éthoxycarbonylméthoxy)-6'-(cyclohexyloxy)biphényl-2,2'-diyl]-bis-[(di-3,5-di-tert.butylphényl)phosphine,
(R)- et (S)-[5,5'-dichloro-6,6'-bis(1-méthoxycarbonyl-éthoxy)-biphényl-2,2'-diyl]-bis-[(di-4-fluorophényl)phosphine, (R)- et (S)-[5,5'-dichloro-6,6'-bis(1-éthoxycarbonyl-éthoxy)-biphényl-2,2'-diyl]-bis-[(di-4-fluorophényl)phosphine,
(R)- et (S)-[5,5'-dichloro-6,6'-bis(méthoxycarbonyl-méthoxy)-biphényl-2,2'-diyl]-bis-[(di-4-fluorophényl)phosphine, (R)- et (S)-[5,5'-dichloro-6,6'-bis-(éthoxycarbonyl-méthoxy)-biphényl-2,2'-diyl]-bis-[(di-4-fluorophényl)phosphine,
(R)- et (S)-[5,5'-dichloro-6-(méthoxycarbonyl-méthoxy)-6'-(cyclohexyloxy)-biphényl-2,2'-diyl]-bis-[(di-4-fluorophényl)phosphine et (R)- et (S)-[5,5'-dichloro-6-(éthoxycarbonyl-méthoxy)-6'-(cyclohexyloxy)biphényl-2,2'-diyl]-bis-[(di-4-fluorophényl)phosphine,
ainsi que les composés analogues non substitués en position 5,5' et dans le cas d'un centre stéréogène dans les groupements liés en position 6 et/ou 6' également les composés correspondants de configuration (R) et (S) dans les groupements cités.

3. Procédé de production de composés selon l'une des revendications 1 et 2 **caractérisé en ce que**
• dans une étape a)
des composés de formule (II) 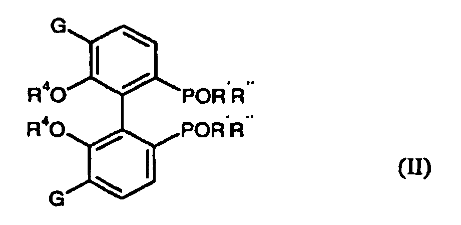 sont convertis par clivage d'éther en composés de formule (III) 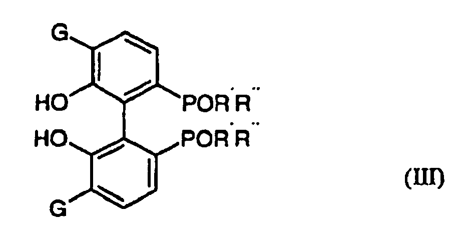
• dans une étape b1)
les composés de formule (III) sont convertis par réaction avec des composés de formule (IV)
R³-Akt (IV)
en présence de base en composés de formule (V) 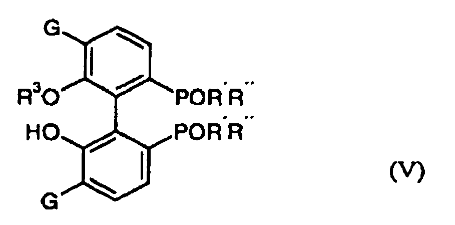
• dans une étape b2)
les composés de formule (V) sont convertis par réaction avec des composés de formule (VI)
R²OOC-B-Akt (VI)
en présence de base en composés de formule (VII) 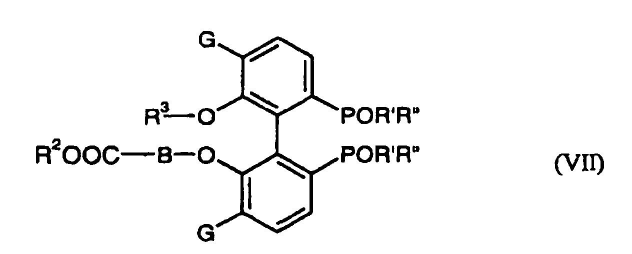
• et dans une étape c)
les composés de formule (VII) sont réduits en composés de formule (I),
où, dans les formules citées, B, R², R³, G, R' et R" possèdent les significations qui ont été définies pour la formule (I) dans la revendication 1 et
Akt représente un halogène ou un sulfonate et
R⁴ dans la formule (II) représente C₁-C₆-alkyle.

4. Composés de formule (VII) 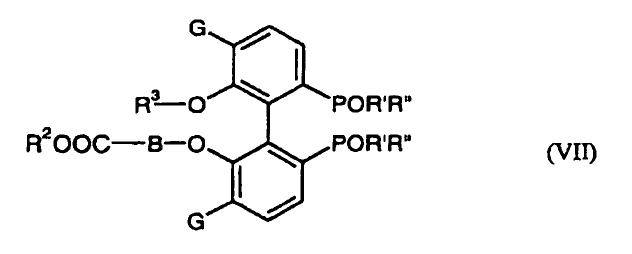 où B, R², R³, G, R' et R" possèdent les significations qui ont été définies pour la formule (I) dans la revendication 1.

5. Composés de formule (V) 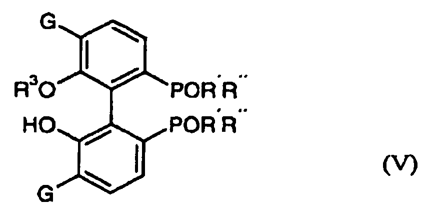 où R³, G, R' et R" possèdent les significations qui ont été définies pour la formule (I) dans la revendication I.

6. Complexes de métaux de transition contenant des composés de formule (I) selon la revendication 1.

7. Catalyseurs contenant des complexes de métaux de transition selon la revendication 6.

8. Procédé pour la production catalysée par des métaux de transition de composés énantiomériquement enrichis **caractérisé en ce que** des catalyseurs selon la revendication 7 sont utilisés comme catalyseurs.
